# FASCICULE DE BREVET EUROPEEN

(11) **EP 2 630 092 B1**
(45) Date de publication et mention de la délivrance du brevet: **13.08.2014**
(21) Numéro de dépôt: 11771137.4
(22) Date de dépôt: 18.10.2011
(51) Int. Cl.: C02F 3/30, C02F 3/12, C02F 3/00, C02F 101/16, C02F 103/18, C02F 103/22, C02F 103/20

(54) **PROCEDE DE TRAITEMENT D'EAU AU SEIN D'UN REACTEUR BIOLOGIQUE SEQUENTIEL**
VERFAHREN ZUR WASSERBEHANDLUNG IN EINEM SEQUENCING-BATCH-REAKTOR
METHOD FOR TREATING WATER IN A SEQUENCING BATCH REACTOR

(30) Priorité: 18.10.2010 FR 1058492
(43) Date de publication de la demande: 28.08.2013
(73) Titulaire: Veolia Water Solutions & Technologies Support, 94417 Saint-Maurice Cedex (FR)
(72) Inventeur: LEMAIRE, Romain, F-75017 Paris (FR); CHAUZY, Julien, F-92160 Antony (FR); VEUILLET, Frédéric, F-94700 Maisons Alfort (FR)
(74) Mandataire: Provost, Antoine
(86) Numéro de dépôt international: PCT/EP2011/068196
(87) Numéro de publication internationale: WO 2012/052443

(56) Documents cités:
- EP-A1- 1 721 870
- WO-A1-2010/074008
- WO-A1-2011/061084
- US-A- 5 266 200
- US-A1- 2005 242 027

## Description

### 1. Domaine de l'invention

Le domaine de l'invention est celui du traitement d'eaux chargées en azote sous forme d'ammonium. L'invention trouve notamment son application dans le traitement d'effluents industriels ou municipaux tels que les surnageants de digesteurs anaérobies, les effluents issus du traitement des boues par oxydation par voie humide, les condensats de traitement de gaz, les condensats de traitement de boues d'épuration, les lixiviats de décharges, les effluents d'abattoir, les lisiers de porcs ou tout autre type d'effluent chargé en azote sous forme d'ammonium.

Plus précisément, l'invention concerne un procédé de traitement d'eau mettant en oeuvre un réacteur biologique séquentiel (RBS ou SBR en langue anglaise) à l'intériéur duquel sont successivement mises en oeuvre notamment des étapes de traitement biologique aérées et anoxiques.

### 2. Art antérieur

Les procédés biologiques de traitement d'eau sont couramment mis en oeuvre afin d'abattre la teneur en pollution azotée des eaux.

Au rang de ces procédés biologiques figure le procédé de nitrification-dénitrification mis en oeuvre en réacteur biologique séquentiel (RBS).

Un tel procédé consiste à introduire une eau à traiter dans un réacteur biologique à l'intérieur duquel sont alternativement mises en oeuvre des phases aérées et des phases anoxiques.

Au cours des phases aérées, l'injection d'oxygène (sous forme d'air ou d'oxygène pur par exemple) dans le réacteur promeut le développement d'une biomasse nitrifiante autotrophe permettant la transformation de l'azote sous forme d'ammonium (NH₄⁺) en nitrates (NO₃⁻) constituée en fait d'une biomasse transformant l'azote sous forme d'ammonium (NH₄⁺) en nitrites (NO₂⁻) dite biomasse AOB (« *ammonia oxidising bacteria »)* et d'une biomasse transformant les nitrites (NO₂⁻) en nitrates (NO₃⁻) , dite biomasse NOB *(« nitrites oxidising bacteria* »)

Au cours des phases anoxiques, l'arrêt de l'aération du réacteur promeut le développement d'une biomasse dénitrifiante qui réduit les nitrates en azote gazeux moléculaire (diazote) N₂ en passant par le stade nitrites. Cette biomasse dénitrifiante est de nature hétérotrophe, c'est-à-dire qu'elle ne peut se développer qu'en présence d'une source de carbone organique.

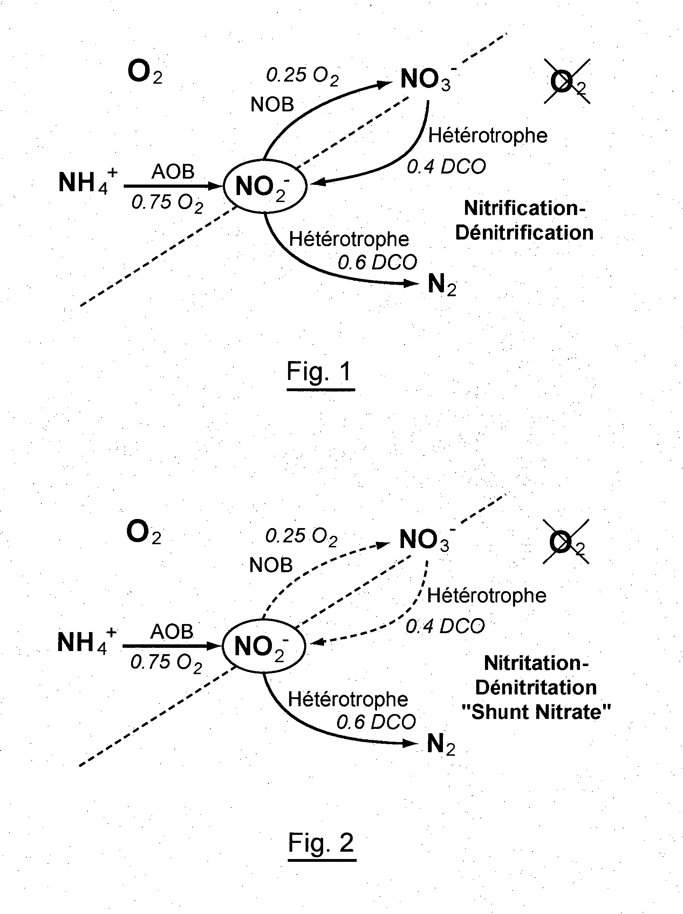

Ce procédé d'abattement de la pollution azotée par nitrification-dénitrification est représenté de façon schématique à la figure 1.

Un tel procédé de traitement biologique est particulièrement efficace du fait que sa mise en oeuvre conduit à abattre, de manière non négligeable, la teneur en pollution azotée de l'eau. Il présents toutefois quelques inconvénients. Notamment, sa mise en oeuvre requiert d'injecter dans le réacteur une quantité relativement importante d'oxygène pour assurer la transformation de l'ammonium en nitrates. En outre, la plupart des eaux à traiter ont généralement une teneur en pollutions organique (DBO, Demande Biochimique en Oxygène) trop faible pour permettre d'abattre de manière satisfaisante la pollution azotée par nitrification-dénitrification. Il est ainsi souvent nécessaire d'injecter du carbone dans le réacteur sous forme de réactifs (par exemple un substrat carboné facilement biodégradable) de manière à ce que les bactéries de type hétérotrophe puissent assurer l'élimination des nitrates en quantité satisfaisante.

Un tel procédé de traitement par nitrification-dénitrification est ainsi relativement coûteux à mettre en oeuvre du fait de la consommation assez importante en oxygène et en réactif carboné qu'il implique.

Afin de pallier au moins en partie ces inconvénients, un procédé a été développé visant à abattre la pollution sous forme d'ammonium en minimisant la formation de nitrates. Ce procédé dit de nitritation-dénitritation également appelé « shunt des nitrates » consiste à introduire une eau à traiter dans un réacteur biologique séquentiel à l'intérieur duquel sont alternativement mises en oeuvre des phases aérées et des phases anoxiques sous des conditions opérationnelles assurant une pression sélective pour le développement des bactéries AOB au détriment des bactéries NOB. Ces conditions opérationnelles peuvent être une concentration élevée en ammonium (NH₄⁺), une faible concentration en oxygène dissous durant les phases aérées, une température supérieure à 28°C, un faible âge de boues ou plusieurs conditions opérationnelles combinées.

Au cours des phases aérées, l'injection d'oxygène dans le réacteur permet le développement de bactéries de type AOB qui agissent sur l'azote ammoniacal (NH₄⁺) pour former des nitrites (NO₂⁻). L'utilisation d'un réacteur biologique séquentiel permet d'obtenir de fortes concentrations en ammonium après chaque séquence d'alimentation de l'eau à traiter dans le réacteur. Les bactéries NOB étant plus inhibées par les fortes concentrations en ammoniac aqueux, en équilibre chimique avec l'ammonium en phase aqueuse, que les bactéries AOB, leur développement est ainsi limité. D'autre part, l'oxygène est injecté de façon à maintenir de préférence une faible concentration en oxygène dissous dans le réacteur, afin de favoriser le développement des bactéries AOB au détriment des bactéries NOB du fait d'une meilleure affinité pour l'oxygène des bactéries AOB. La production de nitrates à partir des nitrites par la biomasse NOB se trouve ainsi limitée.

Au cours des phases anoxiques, la biomasse hétérotrophe est essentiellement dévolue à la transformation des nitrites en azote moléculaire, la teneur en nitrates étant faible. Cette biomasse hétérotrophe se trouve en concurrence avec la biomasse NOB pour la consommation des nitrites et contribue à limiter la croissance de cette dernière.

Ce procédé d'abattement de la pollution azotée par « shunt des nitrates » est représenté de façon schématique à la figure 2.

La mise en oeuvre d'un tel procédé de nitritation-dénitritation permet, comparativement à celle d'un procédé de nitrification-dénitrification classique tel que décrit en figure 1, de réduire d'environ 25% la consommation en oxygène et d'environ 40% la consommation en réactifs carbonés. Elle permet ainsi d'abattre de manière satisfaisante la pollution azotée d'une eau de manière plus économique.

Il est également connu dans l'état de la technique un autre procédé biologique dit de « nitritation-déammonification ». Celui-ci permet de réduire encore davantage le coût inhérent au traitement de la pollution azotée d'une eau.

Un tel procédé consiste à introduire une eau à traiter dans un réacteur biologique séquentiel à l'intérieur duquel sont alternativement mises en oeuvre des phases aérées et des phases anoxies en minimisant la formation de nitrates par des conditions opérationnelles sélectives et en mettant en oeuvre une biomasse spécifique dite biomasse « anammox ».

Au cours des phases aérées, la mise en oeuvre des mêmes conditions opérationnelles que celles décrites précédemment pour le procédé «shunt des nitrates » permet de sélectionner des bactéries AOB au détriment des bactéries NOB et de minimiser la production de nitrates à partir des nitrites par la biomasse NOB.

Au cours des phases anoxies, des bactéries de type anammox se développent et agissent sur les ions ammonium et sur les nitrites pour former du diazote (N₂) gazeux ainsi qu'une petite quantité de nitrates sans consommer de carbone organique puisqu'il s'agit de bactéries autotrophes, à la différence de la biomasse hétérotrophe responsable de l'étape de dénitritation dans le procédé « shunt des nitrates ».

Lorsque l'étape de dénitritation, consistant en la dégradation des nitrites sous forme de diazote (N₂) gazeux, implique des bactéries de type anammox, cette étape dite de dénitritation est plus précisément nommée déammonification.

La mise en oeuvre d'un tel procédé de « nitritation-déammonification » permet, comparativement à celle d'un procédé de « nitrification-dénitrification » classique, de réduire d'environ 60% la consommation en oxygène et d'environ 90% la consommation en réactifs carbonés. Elle permet ainsi d'abattre de manière satisfaisante la pollution azotée d'une eau de manière encore plus économique.

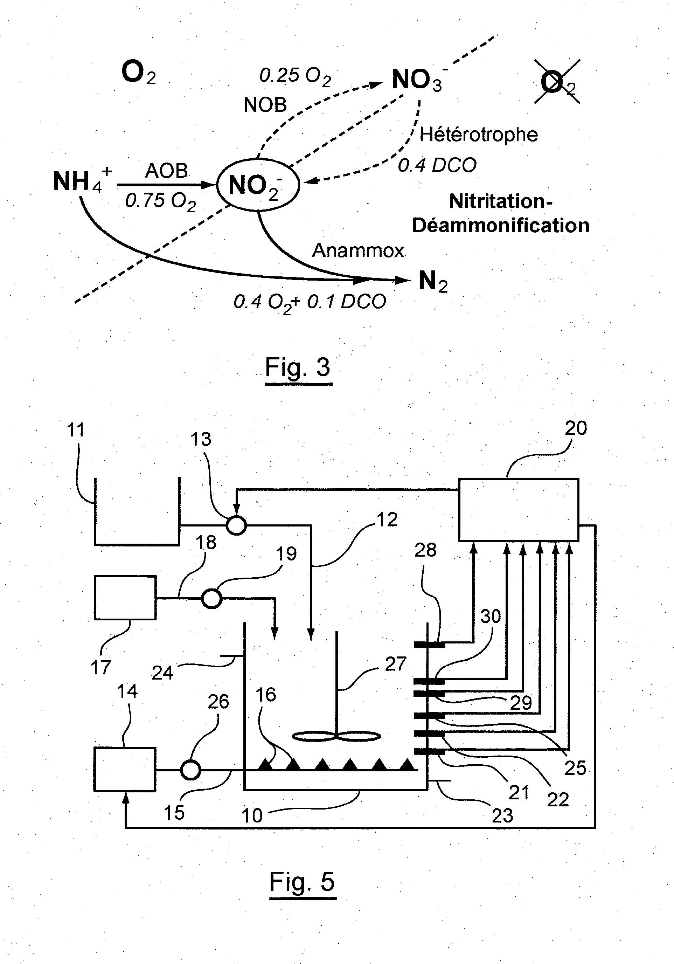

Ce procédé d'abattement de la pollution azotée par «nitritation-déammonification » est représenté de façon schématique à la figure 3.

Le document EP-A1-1 721 870, décrit un procédé d'optimisation selon lequel le ratio nitrite/ammonium, la durée d'aération et le pH sont contrôlés et la concentration en nitrite peut être contrôlée par rapport à l'aération (voir paragraphe 26).

Le document US-A1-2005/242027 décrit un procédé de traitement d'eau par nitritation-dénitritation. Selon ce procédé, l'eau à traiter est introduite dans un réacteur de nitritation dans lequel elle est mise en contact avec des bactéries de type AOB. La concentration en carbone inorganique à l'intérieur du réacteur de nitritation est maintenue à une valeur minimale de 35 mg-C/L en y introduisant des carbonates et/ou bicarbonates. L'ammoniaque est alors dégradé en nitrites et l'acide nitreux est nitrifié. L'eau nitritée est ensuite introduite dans un réacteur de dénitritiation qui peut par exemple loger des bactéries Anammox.

### 3. Inconvénients de l'art antérieur

Si la mise en oeuvre des procédés d'abattement de la pollution azotée par nitritation-dénitritation de type « shunt des nitrates » ou « nitritation-déammonification » présentent les avantages de réduire la consommation en oxygène et en réactifs carbonés comparativement aux procédés de nitrification-dénitrification classiques, elle n'est pas exempte d'inconvénients.

Il a en particulier été observé que la mise en oeuvre de procédés de nitritation-dénitritation par « shunt des nitrates » ou par « nitritation-déammonification » engendre le rejet dans l'atmosphère de protoxyde d'azote (N₂O) encore appelé oxyde nitreux.

Le protoxyde d'azote est un gaz à effet de serre puissant. Il est en particulier 300 fois plus puissant que le dioxyde de carbone. Au-delà de sa contribution au réchauffement de l'atmosphère, le protoxyde d'azote participe également à la destruction de la couche d'ozone. Le rejet dans l'atmosphère de protoxyde d'azote exerce donc un impact négatif sur l'environnement.

Dans un contexte où l'importance accordée aux contraintes d'ordre environnemental et à la préservation de l'environnement ne cesse de croître, le rejet de protoxyde d'azote constitue un frein à la mise en oeuvre des procédés de nitritation-dénitritation par « shunt des nitrates » ou par « nitritation-déammonification » quand bien même celle-ci procure les avantages de réduire la consommation en oxygène et en réactifs carbonés.

Plusieurs études ont été menées dans le but d'identifier les origines de tels rejets de protoxyde d'azote.

La plupart de ces études ont conduit l'Homme du métier à admettre que les bactéries de type AOB sont à l'origine du rejet de protoxyde d'azote pendant les étapes de nitritation lorsque la concentration en oxygène dans le réacteur est faible et que la concentration en nitrites y est importante. Dans ces conditions, les bactéries AOB consomment en effet en partie les nitrites qu'elles génèrent pour produire du monoxyde d'azote. Elles consomment ce monoxyde d'azote pour produire du protoxyde d'azote. Toutefois il n'a pas encore été démontré que ces bactéries AOB puissent consommer le protoxyde d'azote pour produire du diazote, ce qui implique que d'importantes quantités de protoxyde d'azote sont alors rejetées dans l'atmosphère.

Shiskowski & Mavinic, enseignent qu'en présence de nitrites dans le réacteur, une baisse du pH, c'est-à-dire une hausse de la concentration en acide nitreux (HNO₂) dans le réacteur s'accompagne d'une hausse de la production de protoxyde d'azote (Shiskowski M., Mavinic S. 2006. The influence of nitrite and pH (nitrous acid) on aerobic-phase, autotrophic N2O generation in a wastwater treatment bioreactor. J. Environ, Eng.Sci. 5 : 273-283). Les auteurs émettent par conséquent l'hypothèse selon laquelle le pH du contenu du réacteur ainsi que sa concentration en nitrites pourraient avoir de l'importance dans la production de protoxyde d'azote par les bactéries AOB en conditions de faible aération.

Dans une étude plus récente, Kampschreur et al infirment toutefois cette hypothèse en indiquant qu'en présence de nitrites dans le réacteur, une baisse du pH, c'est-à-dire une hausse de la concentration en acide nitreux (HNO₂) dans le réacteur n'a pas d'effet sur la production de protoxyde d'azote (Marlies J. Kampschreur, Wouter R.L. van der Star, Hubert A. Wielders, Jan Willem Mulder, Mike S.M. Jetten, Mark C.M. van Loosdrecht. 2008. Dynamics of nitric oxide and nitrous oxide emission during full-scale reject water treatment. Water research. 42: 812-826). Ils ont au contraire observé une baisse de la production de protoxyde d'azote alors que le pH dans le réacteur diminuait pendant la phase aérée.

Yang et al indiquent ultérieurement que la production de protoxyde d'azote pourrait être réduite en limitant la concentration en ammoniaque et en nitrites dans le réacteur ou en favorisant la dénitrification anoxique en injectant dans le réacteur du carbone provenant d'une source extérieure (Qing Yang, Xiuhong Liu, Chengyao Peng, Shuying Wang, Hongwei Sun, Yonhzhen Peng. 2009. N2O production during nitrogen removal via nitrite from domestic wastewater : main sources and control method. Environ. Sci. Tehcnol. 43 : 9400-9406).

Plus récemment, Foley et al concluent leur étude en indiquant que la production de protoxyde d'azote est généralement liée à une concentration importante en nitrites dans le bioréacteur mais que les mécanismes à l'origine de la formation des nitrites et du protoxyde d'azote sont nombreux et très complexes (Jeffrey Foley, David de Haas, Zhiguo Yuan, Paul Lant. 2010. Nitrous oxide generation in full-scale biological nutrient removal watswater treatment plants. Water research. 44 : 831-844).

Ces publications scientifiques, dont certains enseignements se contredisent, sont unanimes à mentionner le fait que les procédés de traitement d'eau par nitritation-denitritation présentent l'inconvénient de générer du protoxyde d'azote dont les mécanismes de production sont complexes et non encore maîtrisés.

Dans un tel contexte, l'Homme du métier des procédés de traitement d'eau par nitritation-denitritation était incité soit à se détourner des méthodes de traitement par nitritation-dénitritation en vue de leur trouver des solutions alternatives ne produisant pas de protoxyde d'azote, soit à attendre que la communauté scientifique uniformise son discours quant aux mécanismes responsables de la production de protoxyde d'azote lors de la mise en oeuvre de tels procédés.

Toutefois, les inventeurs ont, contrairement aux a priori de l'Homme du métier, pris le parti d'oeuvrer au développement d'une technique de traitement d'eau par nitritation-dénitritation, celle-ci permettant de réduire la consommation en oxygène et en substrat carboné, dont la mise en oeuvre n'engendrerait pas ou à tout le moins peu de rejet de protoxyde d'azote.

### 4. Objectifs de l'invention

L'invention a donc notamment pour objectif de pallier ces inconvénients de l'art antérieur et d'améliorer les performances des procédés de traitement de type « shunt des nitrates » et « nitritation-déammonification » comprenant chacun une étape de formation de nitrites (nitritation) et une étape dégradation des nitrites (dénitritation).

Notamment, un objectif de l'invention est de procurer, dans au moins un mode de réalisation de l'invention, une telle technique qui permette de mieux maîtriser les processus biologiques mis en oeuvre dans un traitement d'eau par nitritation-dénitritation.

Plus précisément, un objectif de l'invention est de fournir, dans au moins un mode de réalisation, une telle technique dont la mise en oeuvre n'engendre pas ou à tout le moins peu de rejet de protoxyde d'azote comparativement aux techniques de l'art antérieur.

Encore un objectif de l'invention est de fournir, dans au moins un mode de réalisation, une telle technique qui soit plus économique à mettre en oeuvre que les techniques de l'art antérieur.

### 5. Exposé de l'invention

Ces objectifs, ainsi que d'autres qui apparaîtront par la suite, sont atteints selon l'invention à l'aide d'un procédé de traitement d'une eau chargée en azote sous forme d'ammonium au sein d'un réacteur biologique séquentiel, tel que defini par les revendications, ledit procédé comprenant au moins :
- une première étape (i) d'alimentation en ladite eau dudit réacteur biologique séquentiel ;
- une étape (ii) aérée de nitritation ;
- une étape (iii) anoxie de dénitritation ;
- une étape (iv) d'extraction d'une eau traitée dudit réacteur ;
ledit procédé comprenant en outre une mesure en ligne de la concentration en nitrites de ladite eau présente dans ledit réacteur, une mesure du pH de ladite eau présente dans ledit réacteur, une étape de détermination d'une information représeritative de la concentration en acide nitreux (HNO₂) de ladite eau contenue dans ledit réacteur en fonction de ladite mesure en ligne de la concentration en nitrites et de ladite mesure du pH, et une étape de contrôle de la durée de ladite étape (ii) aérée de nitritation en fonction de ladite concentration en acide nitreux.

Ainsi, l'invention repose sur une approche tout à fait innovante qui consiste à mettre en oeuvre, dans un procédé de traitement d'eau par nitritation-dénitritation, une mesure en ligne de la concentration en nitrites et du pH de l'eau présente dans le réacteur biologique séquentiel au sein duquel ont lieu les réactions de nitritation et de dénitritation, et une déduction de la concentration en acide nitreux à partir de cette mesure de la concentration en nitrites et de la mesure de pH dans le but de mieux maîtriser les processus biologiques impliqués dans un tel traitement, en particulier la production de protoxyde d'azote inhérente à la mise en oeuvre d'un procédé de traitement d'effluent par nitritation-dénitritation.

Au-delà d'une certaine concentration en acide nitreux dans le réacteur lors de phases aérées, on observe une production de protoxyde d'azote non négligeable. La connaissance de la concentration en nitrites et du pH de l'eau présente dans le réacteur permet de déterminer sa concentration en acide nitreux. La durée de la phase aérée de nitritation est contrôlée selon l'invention en fonction de la concentration en acide nitreux en sorte que la formation de protoxyde d'azote peut être évitée ou être à tout le moins fortement réduite.

Les inventeurs ont procédé à des essais pour vérifier si oui ou non une concentration importante en acide nitreux dans le réacteur engendre la production de protoxyde d'azote alors que Shiskowski & Mavinic, puis Kampschreur et al ont des avis divergents sur la question.

Les inventeurs ont observé que la production de protoxyde d'azote n'est pas liée à une concentration importante en nitrites dans le réacteur mais plutôt à une concentration importante en acide nitreux, validant les indications de Shiskowski & Mavinic pourtant récemment infirmées par Kampschreur et al.

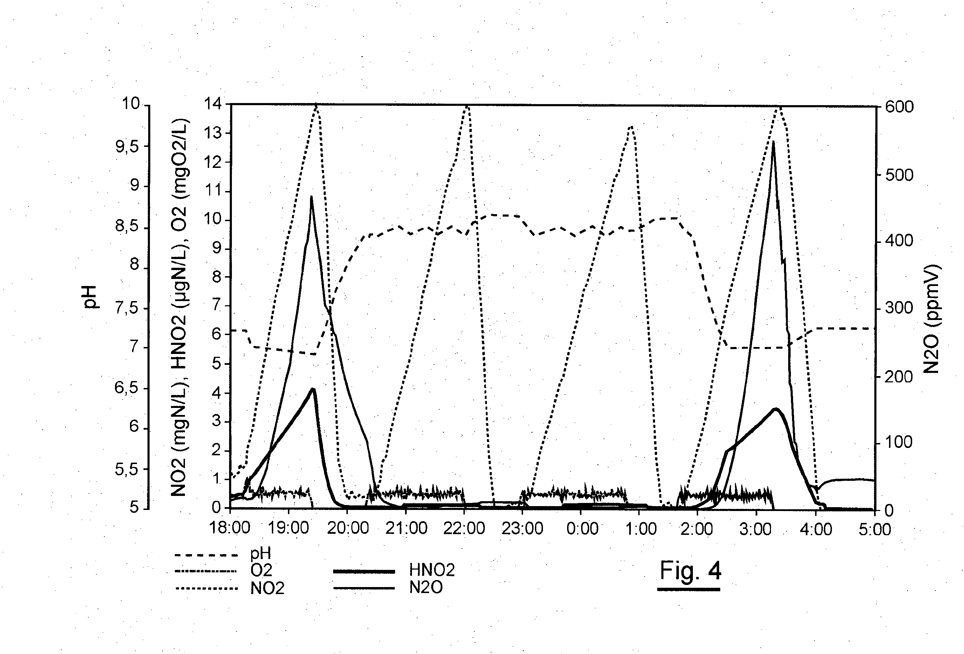

Ce phénomène est illustré à la figure 4 qui présente un graphique représentant les variations de pH, de concentrations en O₂, en NO₂, en HNO₂ et d'émissions en N₂O dans un réacteur au sein duquel a été mis en oeuvre un procédé de traitement d'eau par nitritation-dénitritation. L'étude de ce graphique met en évidence que des pics de production de protoxyde d'azote coïncident avec des pics de concentration en acide nitreux, alors qu'aucun pic de production de protoxyde d'azote n'est observé lorsque la concentration en acide nitreux est faible quand bien même la concentration en nitrites est importante. Ceci confirme que la production de protoxyde d'azote lors des phases aérées se produit lorsque la concentration en acide nitreux dans le réacteur est importante.

Partant d'un tel constat, l'Homme du métier cherchant à réduire la production de protoxyde d'azote inhérente à la mise en oeuvre d'un procédé de traitement d'effluent par nitritation-dénitritation aurait cherché à augmenter le pH à l'intérieur du réacteur, ceci pouvant être obtenu en injectant dans le réacteur un réactif basifiant comme de la soude.

Une telle pratique peut effectivement permettre d'augmenter le pH dans le réacteur et en conséquence de réduire de manière simple la concentration en HNO₂ et donc la production de protoxyde d'azote. Toutefois, l'injection de réactif basifiant représente un poste de coût non négligeable, et également un impact sur l'environnement (empreinte carbone de la production et du transport du réactif basifiant). Cette pratique réduirait donc l'intérêt de mettre en oeuvre une technique de traitement d'eau par nitritation-dénitritation dont le bénéfice est justement de réduire le coût lié à l'injection d'air et de réactif carboné dans le réacteur.

Les inventeurs ont alors recherché une autre solution pour prévenir ou à tout le moins fortement limiter la production de protoxyde d'azote au cours d'un traitement de type nitritation-dénitritation.

Dans ce cadre, les inventeurs ont été conduits à mettre en oeuvre l'invention qui consiste, comme cela a été expliqué plus haut, à déterminer la concentration en acide nitreux dans le réacteur à partir de la mesure de la concentration en nitrites et de la mesure de pH dans le réacteur, puis à contrôler la durée de la phase de nitritation, en d'autres termes l'aération du réacteur, en fonction de la concentration en acide nitreux.

La connaissance de la concentration en acide nitreux dans le réacteur permet de contrôler efficacement l'aération du réacteur de façon telle que la mise en oeuvre du procédé soit optimisée et que la production de protoxyde d'azote soit maîtrisée.

La mesure de la concentration en nitrites s'effectue en ligne, c'est-à-dire qu'elle est effectuée directement sur le site de production et non dans un laboratoire après prélèvement d'échantillons.

La mesure de la concentration en nitrites peut être réalisée directement, c'est-à-dire par le moyen d'une sonde mesurant directement la concentration en ions nitrites en solution, ou indirectement, c'est-à-dire par exemple par le moyen d'une sonde mesurant en solution les formes oxydées de l'azote (aussi appelées NOₓ) ainsi que les ions nitrates, et en en déduisant la concentration en nitrites par calcul.

Au sens de l'invention, la dénitritation est une étape au cours de laquelle des nitrites sont dégradés en diazote gazeux. Cette dégradation peut impliquer des bactéries de type hétérotrophes et/ou de type anammox. Lorsque l'étape de dénitritation implique des bactéries de type anammox, celle-ci est plus précisément nommée « déammonification ».

Les étapes d'alimentation et d'aération peuvent être mise en oeuvre de manière concomitante afin de réduire la durée du traitement.

Un procédé selon l'invention peut comprendre un unique cycle comprenant une alimentation du réacteur avec la totalité de l'eau à traiter, une nitritation, une dénitritation, une décantation et une extraction d'eau traitée. Selon une autre approche, un procédé selon l'invention peut comprendre une pluralité de sous cycles comprenant chacun une alimentation du réacteur avec une portion seulement de l'eau à traiter, une nitritation et une dénitritation. Plusieurs sous cycles sont alors successivement mis en oeuvre jusqu'à ce que l'ensemble du volume: d'eau à traiter ait été introduit et traité dans le réacteur. L'eau traitée peut ensuite être décantée puis extraite du réacteur. Un procédé selon l'invention comprend au moins une étape d'alimentation, une étape aérée de nitritation et une étape anoxie de dénitritation, ces étapes n'étant pas nécessairement mises en oeuvre dans cet ordre.

Selon une caractéristique avantageuse, un tel procédé comprend une mesure en ligne de la concentration en ions ammonium de ladite eau présente dans ledit réacteur et une étape de contrôle de ladite première étape (i) d'alimentation dudit réacteur, ladite étape de contrôle de ladite première étape (i) d'alimentation comprenant les étapes suivantes :
- calcul de la somme de ladite concentration en nitrites et de ladite concentration en ammonium ;
- comparaison de ladite somme à une première valeur seuil S1 prédéterminée ;
- comparaison de ladite concentration en acide nitreux à une deuxième valeur seuil S2 prédéterminée ;
- vérification du niveau d'eau dans ledit réacteur ;
- arrêt de ladite première étape (i) d'alimentation dès que ladite somme est supérieure à une première valeur seuil S1 ou que ladite concentration en acide nitreux devient supérieure à ladite deuxième valeur seuil S2 ou que le niveau haut dudit réacteur est atteint.

La connaissance des concentrations en nitrites et en acide nitreux dans le réacteur permet en effet de contrôler efficacement l'alimentation en eau du réacteur de façon telle que la mise en oeuvre du procédé soit optimisée et que la production de protoxyde d'azote soit maîtrisée.

Au cours même de l'alimentation du réacteur, il peut arriver que la concentration en acide nitreux dans le réacteur atteigne une valeur telle que la production de protoxyde d'azote est favorisée.

Il a par ailleurs été remarqué qu'une concentration importante en ammonium à l'intérieur du réacteur engendre nécessairement une forte concentration en nitrites à l'intérieur du réacteur. Les bactéries de type AOB transforment en effet l'ammonium en nitrites.

En outre, il a été remarqué que lorsque la concentration en nitrites à l'intérieur du réacteur est trop importante, la biomasse de type AOB impliquée dans la nitritation est inhibée par l'acide nitreux (HNO₂) qui est en équilibre chimique avec les nitrites en phase aqueuse.

Ainsi, la connaissance de la concentration en nitrites et en acide nitreux à l'intérieur du réacteur permet d'arrêter l'alimentation dudit réacteur en eau chargée en ammonium de manière telle que la nitritation ne soit pas inhibée, que les performances d'épuration du procédé ne soient pas affectées et que la production de protoxyde d'azote soit maîtrisée.

Selon une caractéristique avantageuse, ladite étape de contrôle de la durée de ladite étape (ii) aérée de nitritation comprend les étapes suivantes :
- comparaison de ladite concentration en acide nitreux à une deuxième valeur seuil prédéterminée S2,
- arrêt de ladite étape (ii) aérée de nitritation dès que ladite concentration en acide nitreux devient supérieure à ladite deuxième valeur S2 prédéterminée.

Les inventeurs ont remarqué qu'une concentration en acide nitreux trop importante est favorable à la production de protoxyde d'azote.

Les inventeurs ont en outre remarqué que lorsque la concentration en acide nitreux dans le réacteur devient importante au cours de l'étape d'aération du réacteur, la biomasse de type AOB impliquée dans la nitritation est inhibée. La connaissance de la concentration en nitrites et du pH dans le réacteur permet de déterminer la concentration en acide nitreux et d'arrêter l'aération du réacteur et d'initier une phase anoxie dès que sa valeur devient telle qu'elle engendrerait une inhibition de la biomasse de type AOB. Les nitrites produits seront alors dégradés en diazote gazeux dû à l'activité des bactéries hétérotrophes ou anammox pendant ladite phase anoxie.

Le contrôle de l'aération selon l'invention permet alors tant d'éviter la production de protoxyde d'azote que l'inhibition de la biomasse de type AOB.

Selon une caractéristique avantageuse, un tel procédé comprend une étape de contrôle de la durée de ladite étape (iii) anoxie de dénitritation, ladite étape de contrôle de la durée de ladite étape (iii) anoxie de dénitritation comprenant les étapes suivantes :
- comparaison de ladite concentration en nitrites à une troisième valeur seuil S3 prédéterminée ;
- arrêt de ladite étape (iii) anoxie de dénitritation dès que ladite concentration en nitrites est inférieure à ladite troisième valeur seuil S3 prédéterminée.

La connaissance de la concentration en nitrites dans le réacteur permet de contrôler efficacement la durée de la phase anoxie de façon que la mise en oeuvre du procédé soit optimisée.

Les inventeurs ont en effet remarqué que lorsque la concentration en nitrites à l'intériéur du réacteur devient très faible, la cinétique de la réaction de dénitritation devient plus lente. Il peut donc être préférable de stopper la phase anoxie afin d'avoir toujours des cinétiques de consommation des nitrites les plus élevées possible. Ainsi, dès que la concentration en nitrites dans le réacteur atteint un seuil bas prédéterminé, l'étape d'anoxie doit être arrêtée et l'étape suivante peut débuter. Les inventeurs ont observé que le fait de terminer la phase anoxie avant que la concentration en nitrites soit nulle permet d'améliorer les performances d'épuration du procédé en maximisant les cinétiques de consommation des nitrites durant la phase anoxique.

Selon un premier mode de réalisation, ladite étape anoxie de dénitritation comprend une étape de mise en contact de ladite eau avec des bactéries hétérotrophes.

Le procédé selon l'invention fonctionne alors dans une configuration « shunt des nitrates » : l'ammonium est transformé en nitrites par des bactéries AOB, puis les nitrites sont transformés en diazote gazeux par des bactéries hétérotrophes.

Dans ce cas, une première variante d'un tel premier mode de réalisation prévoit qu'un procédé selon l'invention comprend une mesure en ligne de la concentration en ions ammonium de ladite eau présente dans ledit réacteur et une étape de contrôle de ladite première étape (i) d'alimentation dudit réacteur, ladite étape de contrôle de ladite première étape (i) d'alimentation comprenant les étapes suivantes :
- comparaison de ladite concentration en ions ammonium à une quatrième valeur seuil S4 prédéterminée;
- vérification du niveau d'eau dans ledit réacteur ;
- arrêt de ladite première étape (i) d'alimentation dès que ladite concentration en ions ammonium est supérieure à ladite quatrième valeur seuil S4 ou dès que le niveau haut dudit réacteur est atteint.

Cette première variante est mise en oeuvre lorsque l'effluent traité contient de la DCO biodégradable dont la quantité ou la qualité est suffisante pour faire au moins en partie office de substrat carboné nécessaire à la réalisation de la dénitritation. En conséquence, cette première étape d'alimentation est sans aération afin que l'étape anoxie de dénitritation puisse être initiée et ainsi réduire les injections de réactif carboné complémentaire dans le réacteur et par conséquent le coût de mise en oeuvre du procédé.

Selon une deuxième variante du premier mode de réalisation ou de sa première variante, ladite étape anoxie de dénitritation comprend une étape d'injection de carbone dans ledit réacteur, ledit procédé comprenant en outre une étape de contrôle de ladite étape d'injection de carbone, ladite étape de contrôle de ladite étape d'injection de carbone comprenant les étapes suivantes :
- comparaison de ladite concentration en nitrites avec une cinquième valeur seuil S5 prédéterminée ;
- arrêt de ladite étape d'apport en carbone dès que ladite concentration en nitrites est inférieure à ladite cinquième valeur seuil S5.

Pour transformer les nitrites en diazote gazeux, les bactéries hétérotrophes consomment du carbone organique. Toutefois, certaines eaux à traiter ont une teneur relativement faible en carbone organique. Il est alors nécessaire d'injecter un substrat carboné dans le réacteur lors des phases anoxiques. Les inventeurs ont remarqué que si l'ajout d'un tel substrat carboné dans le réacteur est trop important, ce substrat carboné facilement biodégradable ne sera pas totalement consommé durant la phase anoxique correspondante et l'oxygène injecté dans le réacteur lors de la phase aérée suivante sera principalement utilisé par les bactéries hétérotrophes pour abattre ce substrat carboné en excès, et non par les bactéries AOB pour former des nitrites à partir de l'ammonium. Il est dans ce cas observé une forte diminution des cinétiques de formation de nitrites lors de la phase aérée suivante mais aussi une forte augmentation de la quantité de boues formées par le développement rapide des bactéries hétérotrophes, ainsi qu'une consommation excessive d'oxygène. En outre, une injection trop importante de substrat carboné induit des coûts élevés de fonctionnement. Ainsi, le fait d'arrêter d'injecter du carbone dans le réacteur alors que la concentration en nitrites devient inférieure à un seuil prédéterminé, permet d'ajuster aux besoins les quantités de carbone injectées dans le réacteur et d'éviter le surdosage et ses conséquences négatives lors de la phase aérée suivante. Les coûts inhérents aux injections de carbone, à l'injection d'oxygène et à l'évacuation de la surproduction de boues sont ainsi réduits et les performances d'épuration du procédé sont sécurisées. En outre, la durée des étapes du procédé sont réduites. Ceci permet de produire une quantité d'eau traitée égale tout en réduisant le dimensionnement du réacteur biologique mis en oeuvre à cet effet.

Par ailleurs, durant la phase anoxie de dénitritation, les bactéries hétérotrophes consomment en premier lieu les nitrites et du carbone pour former du NO. Elles consomment ensuite le NO et du carbone pour former du protoxyde d'azote. Elles consomment en dernier lieu ce protoxyde d'azote et du carbone pour former du N₂. L'apport de carbone dans le réacteur au cours de cette phase de dénitritation permet d'éviter la survenance d'une carence en carbone dans le réacteur qui pourrait empêcher les bactéries hétérotrophes de consommer le protoxyde d'azote pour former du N₂. On évite ainsi le rejet de protoxyde d'azote dans l'atmosphère au cours de la phase anoxie de dénitritation.

Selon ce premier mode de réalisation, ladite quatrième valeur seuil S4 est avantageusement comprise entre 1mgN-NH₄/L et 400mgN-NH₄/L et préférentiellement comprise entre 10mgN-NH₄/L et 200mgN-NH₄/L, et ladite cinquième valeur seuil S5 est avantageusement comprise entre 0mgN-NO₂/L et 120mgN-NO₂/L et préférentiellement comprise entre 0mgN-NO₂/L et 50mgN-NO₂/L.

Selon un deuxième mode de réalisation, ladite étape anoxie de dénitritation comprend une étape de mise en contact de ladite eau avec des bactéries anammox.

Le procédé selon l'invention fonctionne alors dans une configuration nitritation-déammonification : une partie des ions ammonium est transformée en nitrites par des bactéries AOB, puis les nitrites et le reste des ions ammoniums sont transformés en diazote gazeux par des bactéries anammox.

L'eau à traiter peut être ou non carencée en alcalinité selon la valeur de son Titre Alcalimétrique Complet (TAC).

Lorsque l'eau à traiter n'est pas carencée en alcalinité, les conditions régnant à l'intérieur du réacteur permettent de transformer en nitrites la totalité de l'ammoniaque contenu dans le volume d'eau à traiter introduit dans celui-ci.

Dans une première variante du deuxième mode de réalisation dans laquelle l'eau à traiter n'est pas carencée en alcalinité, le procédé comprend une mesure en ligne de la concentration en ions ammonium de ladite eau présente dans ledit réacteur (10), et ladite étape (ii) aérée de nitritation est préférentiellement suivie d'une deuxième étape d'alimentation sans aération ledit procédé comprenant une étape de contrôle de ladite deuxième étape d'alimentation sans aération qui comprend les étapes suivantes :
- calcul du ratio de ladite concentration en ammonium sur ladite concentration en nitrites ;
- comparaison dudit ratio à une sixième valeur seuil S6 ;
- vérification du niveau d'eau dans ledit réacteur ;
- arrêt de ladite deuxième étape (i) d'alimentation dès que ledit ratio est supérieur à ladite sixième valeur seuil S6 ou dès que le niveau haut dudit réacteur est atteint.

L'ensemble de l'ammonium de la première portion d'eau à traiter introduite dans le réacteur est transformé en nitrites à l'issue de la première alimentation. Une deuxième alimentation est ensuite mise en oeuvre. Celle-ci est arrêtée dès que les concentrations en ammonium et en nitrites à l'intérieur du réacteur sont propices au traitement de l'ammonium et des nitrites par les bactéries anammox. Une étape de dénitritation mettant en oeuvre des bactéries anammox peut alors être mise en oeuvre.

Lorsque l'eau à traiter est carencée en alcalinité, le pH permettant aux bactéries AOB de fonctionner ne peut être conservé sans ajout d'un réactif basifiant, engendrant un coût supplémentaire. Les conditions régnant à l'intérieur du réacteur ne permettent alors pas de transformer en nitrites de manière totale l'ammoniaque contenu dans le volume d'eau à traiter introduit dans celui-ci.

Dans une deuxième variante du deuxième mode de réalisation dans laquelle l'eau à traiter est carencée en alcalinité, le procédé comprend une mesure en ligne de la concentration en ions ammonium de ladite eau présente dans ledit réacteur, et ladite étape de contrôle de ladite étape (ii) aérée de nitritation comprend préférentiellement en outre les étapes suivantes :
- calcul du ratio de ladite concentration en ammonium sur ladite concentration en nitrites ;
- comparaison dudit ratio à une sixième valeur seuil S6 ;
- arrêt de ladite étape (ii) aérée de nitritation dès que ladite concentration en acide nitreux est supérieure à ladite deuxième valeur seuil S2 prédéterminée ou que ledit ratio est inférieur à ladite sixième valeur seuil S6.

La nitritation est alors arrêtée dès que les concentrations en ammonium et en nitrites à l'intérieur du réacteur sont propices au traitement de l'ammonium et des nitrites par les bactéries anammox et avant d'atteindre le seuil HNO2 d'inhibition des bactéries AOB et anammox de façon telle que la mise en oeuvre du procédé soit optimisée et que la production de protoxyde d'azote soit maîtrisée.

Lorsque le procédé selon l'invention fonctionne en mode nitritation-déammonification; que l'étape aérée de nitritation est suivie d'une deuxième étape d'alimentation non aérée (première variante du deuxième mode de réalisation dans laquelle l'effluent est non carencé en alcalinité), et qu'il comprend plusieurs étapes d'alimentation dudit réacteur séquentiel, l'étape d'alimentation aérée à l'issue de laquelle le niveau haut dudit réacteur séquentiel étant atteint constituant une dernière étape d'alimentation, ladite dernière étape d'alimentation étant suivie d'une dernière une étape de contrôle de l'aération, ladite dernière étape de contrôle de l'aération comprenant les étapes suivantes :
- comparaison de ladite concentration en acide nitreux à ladite deuxième valeur seuil S2 prédéterminée ;
- calcul du ratio entre ladite concentration en ions ammonium et ladite concentration en nitrites ;
- comparaison dudit ratio à ladite sixième valeur seuil S6 ;
- arrêt de ladite aération dès que ledit ratio est inférieur à ladite sixième valeur seuil S6 ou que ladite concentration en acide nitreux est supérieure à ladite deuxième valeur seuil S2.

Selon ce deuxième mode de réalisation, ladite sixième valeur seuil S6 est avantageusement comprise entre 0,6 et 1,2 et préférentiellement entre 0,6 et 1.

Selon les premier et deuxième modes de réalisation, ladite première valeur seuil S1 est avantageusement comprise entre 1 mgN/L et 400 mgN/L et préférentiellement comprise entre 10 mgN/L et 200 mgN/L, ladite deuxième valeur seuil S2 est comprise avantageusement entré 0.01 µgN-HNO₂/L et 20 µgN-HNO₂/L et préférentiellement comprise entre 0.2 µgN-HNO₂/L et 5 µgN-HNO₂/L, ladite troisième valeur seuil S3 est avantageusement comprise entre 0 mgN-NO₂/L et 120mgN-NO₂/L et préférentiellement comprise entre 0 mgN-NO₂/L et 50 mgN-NO₂/L.

### 6. Liste des figures

D'autres caractéristiques et avantages de l'invention apparaîtront plus clairement à la lecture de la description suivante de différents modes de réalisation préférentiels, donnés à titre de simples exemples illustratifs et non limitatifs, et des dessins annexés, parmi lesquels :
- la figure 1 est un schéma relatif à un procédé d'abattement de la pollution azotée par nitrification-dénitrification selon l'art antérieur ;
- la figure 2 est un schéma relatif à un procédé d'abattement de la pollution azotée par nitritation-denitritation « shunt des nitrates » selon l'art antérieur ;

- la figure 3 est un schéma relatif à un procédé d'abattement de la pollution azotée par nitritation-déammonification selon l'art antérieur ;
- la figure 4 présente un graphique représentant les variations de pH et de concentrations en O₂, en NO₂, en HNO₂ et en N₂O dans un réacteur au sein duquel a été mis en oeuvre un procédé de traitement d'eau par nitritation-dénitritation
- la figure 5 présente une installation de traitement d'eau selon l'invention ;
- la figure 6 présente un logigramme illustrant les différentes étapes d'un procédé de traitement d'un effluent contenant peu ou pas de DCO biodégradable selon l'invention d'un effluent par « shunt des nitrates » ;
- la figure 7 présente un logigramme illustrant les différentes étapes d'un procédé de traitement d'un effluent contenant de la DCO biodégradable selon l'invention d'un effluent par « shunt des nitratés » ;
- la figure 8 présente un logigramme illustrant les différentes étapes d'un procédé de traitement selon l'invention d'un effluent non carencé en alcalinité par « ni tritation-déammonification »;
- la figure 9 présente un logigramme illustrant les différentes étapes d'un procédé de traitement selon l'invention d'un effluent carencé en alcalinité par « nitritation-déammonification » ;
- la figure 10 illustre les profils des concentrations en NO₂ et N₂O et du pH lors d'un cycle complet RBS lors du traitement classique par nitritation-dénitritation d'une eau ;
- la figure 11 illustre les profils des concentrations en NO₂, HNO₂, N₂O, O₂ et du pH lors d'un cycle complet RBS avec un seuil HNO₂ S2 égale à 1.5 µgN-HNO₂/L.

### 7. Description d'un mode de réalisation de l'invention

### 7.1. Rappel du principe de l'invention

Le principe général de l'invention repose sur la mise en oeuvre, dans un procédé de traitement d'eau chargée en azote sous formé d'ammonium par nitritation-dénitritation, d'une étape de mesure en ligne de la concentration en nitrites de l'eau présente dans le réacteur biologique séquentiel au sein duquel ont lieu les réactions de nitritation et de dénitritation, d'une étape de mesure du pH de cette eau, d'une étape de détermination de la concentration en acide nitreux dans le réacteur à partir de la mesure de la concentration en nitrites et de la mesure du pH, et d'une étape de contrôle de la durée de ladite étape (ii) aérée de nitritation en fonction de ladite concentration en acide nitreux.

Une telle mise oeuvre permet de prévenir, ou à tout le moins de limiter fortement, la production de protoxyde d'azote, puissant gaz à effet de serre, au cours de la mise en oeuvre d'un procédé de traitement d'eau par nitritation-dénitritation.

### 7.2. Exemple d'une installation selon l'invention

- On présente, en relation avec la figure 5, un mode de réalisation d'une installation de traitement d'eau selon l'invention.

Ainsi que cela est représenté sur cette figure 5, une telle installation comprend des moyens d'alimentation en eau d'un réacteur biologique séquentiel 10 logeant un agitateur 27.

Les moyens d'alimentation comprennent :
- une cuve tampon 11 destinée à contenir une eau à traiter enrichie en azote sous forme d'ammonium ;
- une canalisation d'alimentation 12 qui met en relation la cuve tampon 11 avec le réacteur biologique séquentiel 10, et
- une pompe 13 qui permet, selon qu'elle est ou non mise eu oeuvre, d'alimenter ou non en eau à traiter le réacteur biologique séquentiel 10.

Des moyens d'aération permettent d'injecter de l'oxygène dans le réacteur biologique séquentiel 10. Ces moyens d'aération comprennent un surpresseur 14 et une vanne de régulation d'oxygène 26 qui sont reliés via une canalisation 15 à des diffuseurs d'air 16. Ces diffuseurs d'air 16 sont logés dans une partie inférieure du réacteur biologique séquentiel 10.

Des moyens d'injection de carbone permettent d'injecter du substrat carboné dans le réacteur biologique séquentiel 10. Ces moyens d'injection comprennent, une cuve 17 destiné à contenir le substrat carboné, une canalisation d'injection 18 mettant en relation la cuve 17 et le réacteur biologique séquentiel 10, et une pompe 19 qui permet, selon qu'elle est ou non mise en oeuvre, d'injecter ou non ce substrat dans le réacteur biologique séquentiel 10.

Cette installation comprend des moyens de contrôle pour contrôler les moyens d'alimentation en eau du réacteur biologique séquentiel 10, les moyens d'aération du réacteur biologique séquentiel 10, et les moyens d'injection de carbone dans le réacteur biologique séquentiel.

Ces moyens de contrôle comprennent une armoire de commande 20, pouvant par exemple comprendre un microcontrôleur ou un ordinateur, ainsi qu'une sonde d'ions ammonium 21, une sonde de nitrites 22, une sonde d'oxygène 25, une sonde de pH 29 et une sonde de température 30 qui sont destinées à permettre de mesurer la concentration en ammonium, en nitrites, en oxygène, le pH et la température de l'eau contenue dans le réacteur biologique séquentiel 10. Ils comprennent également un capteur de niveau haut 28 permettant de détecter si le niveau d'eau maximum dans le réacteur séquentiel 10 est atteint.

L'armoire de commande 20 est destinée à déterminer la concentration en acide nitreux à partir de la concentration en nitrites, du pH et de la température, et à comparer la concentration en acide nitreux et les mesures réalisées au moyen des sondes d'ammonium 21, de nitrites 22, et d'oxygène 25 à des valeurs seuils, et de piloter en conséquence la mise en oeuvre de la pompe 13, de la pompe 19, du surpresseur 14 et de la vanne de régulation en O₂ 26 comme il sera expliqué plus en détail par la suite. Elle est également capable de déterminer si l'eau dans le réacteur à atteint le niveau haut de ce dernier.

Le réacteur biologique séquentiel 10 présente une canalisation d'extraction de boues 23 et une canalisation d'extraction d'eau traitée 24.

La mise en oeuvre de la sonde à oxygène peut permettre de réguler la concentration en oxygène dans le réacteur. La régulation en oxygène pourra par exemple fonctionner sur consigne en phase aérée, lorsque la valeur mesurée sur la sonde oxygène est supérieure à une Valeur consigne, l'armoire de commande pilote la vanne de régulation d'oxygène en sorte que moins d'oxygène soit délivré dans le RBS. Inversement, lorsque la valeur mesurée sur la sonde oxygène est inférieure à la Valeur consigne, l'armoire de commande pilote la vanne de régulation d'oxygène en sorte que plus d'oxygène soit délivré dans le RBS. En pratique cette Valeur consigne sera comprise entre 0,1 et 3 mg O₂/L.

Dans une variante non représentée, la sonde d'ammonium peut être remplacée par une sonde de conductivité. Il est en effet bien connu de l'homme du métier qu'il est possible de déduire de la conductivité de l'eau située dans le réacteur biologique séquentiel sa concentration approximative en ammonium.

### 7.3. Exemples de procédés selon l'invention

### 7.3.1. Configuration « Shunt des nitrates »

### 7.3.1.1 Cas d'un effluent contenant très peu de DCO biodégradable

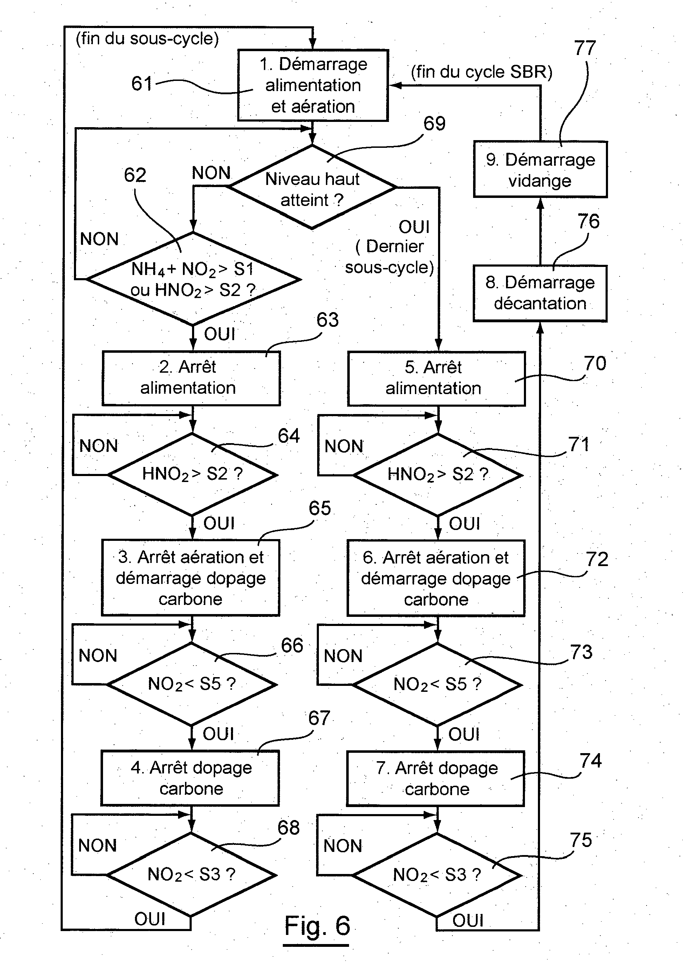

Un procédé selon l'invention de traitement d'une eau chargée en azote sous forme d'ammonium et faiblement chargée en DCO biodégradable mettant en oeuvre un processus de type shunt des nitrates va à présent être décrit en relation avec la figure 6.

Selon ce mode de réalisation, le procédé de traitement consiste à traiter l'eau par portions successives du volume total à traiter.

Selon un tel procédé, le réacteur biologique séquentiel 10 est alimenté en eau à traiter (étape 61). Pour cela, l'armoire de commande 20 pilote la mise en oeuvre de la pompe 13 en sorte qu'une portion du volume total d'eau à traiter contenue dans la cuve tampon 11 soit déversée via la canalisation d'alimentation 12 dans le réacteur biologique séquentiel 10.

L'armoire de commande 20 pilote en parallèle, c'est-à-dire pendant la phase d'alimentation du réacteur, la mise en oeuvre du surpresseur 14 et de la vanne de régulation d'oxygène 26 en sorte que de l'oxygène soit introduit dans le réacteur biologique séquentiel 10 via la canalisation 15 et les diffuseurs d'air 16 : le réacteur est aéré (étape 61).

On observe alors une activité des bactéries AOB à l'intérieur du réacteur biologique séquentiel 10. L'eau à traiter contenue dans le réacteur biologique séquentiel 10 subit ainsi une étape aérée de nitritation.

Au cours de la nitritation, les bactéries AOB agissent sur les ions ammonium présents dans l'eau contenue dans le réacteur biologique séquentiel 10 pour former des nitrites en consommant de l'oxygène.

Le pH, la température et les concentrations en nitrites, en ammonium et en oxygène de l'effluent contenu dans le réacteur 10 sont mesurés en ligne par la mise en oeuvre de l'armoire de commande 20, des sondes de nitrites 22, d'ammonium 21, de pH 29, de température 30 et d'oxygène 25. Dans une variante, ces mesures pourront ne pas être effectuées en continu, mais par exemple à fréquence régulière. À partir de la concentration en nitrites, du pH et de la température, l'armoire de commande 20 calcule la concentration de l'effluent en acide nitreux selon la formule:

[*HN*O₂] = [*NO*₂⁻ ]×10^{-*pH*}×e^{2300/(273+*T*)}

avec T en °C, HNO₂ et NO₂ en mgN/L.

Dans une variante, la concentration en acide nitreux pourra être calculée selon la formule suivante :

[*HNO*₂] = [*NO*₂⁻]×10^{-pH}×10*^{pKa}*

pour une température donnée.

L'alimentation en eau du réacteur est contrôlée (étape 62). Au cours de ce contrôle de l'alimentation, l'armoire de commande 20 :
- calcule la somme de la concentration en nitrites et de la concentration en ammonium ;
- compare la somme à une première valeur seuil S1 égale à 90 mgN/L ;
- compare la concentration en acide nitreux à une deuxième valeur seuil S2 prédéterminée égale à 1.5 µgN-HNO₂/L ;
- vérifie le niveau d'eau dans ledit réacteur.

Dès que cette somme est supérieure à la première valeur seuil S1, ou que la concentration en acide nitreux est supérieure à la deuxième valeur seuil S2 prédéterminée, ou que l'eau dans le réacteur a atteint le niveau haut, l'armoire de commande 20 stoppe le fonctionnement de la pompe 13 en sorte que l'alimentation en eau à traiter du réacteur biologique séquentiel 10 est arrêtée (étape 63).

La durée de l'étape aérée de nitritation est contrôlée (étape 64). Au cours de ce contrôle, l'armoire de commande 20 compare la concentration en HNO₂ à la deuxième valeur seuil S2 prédéterminée égale à 1.5 µgN-HNO₂/L.

Dès que la concentration en HNO₂ est supérieure à ladite deuxième valeur seuil S2 prédéterminée, l'armoire de commande pilote le surpresseur 14 et la vanne de régulation d'oxygène 26 en sorte qu'il ne délivre plus d'oxygène à l'intérieur du réacteur biologique séquentiel 10. Par conséquent, l'étape aérée de nitritation prend fin (étape 65).

On observe alors une activité des bactéries hétérotrophes à l'intérieur du réacteur biologique séquentiel 10. L'eau à traiter contenue dans le réacteur biologique séquentiel 10 subit ainsi une étape anoxie de dénitritation.

Au cours de la dénitritation, les bactéries hétérotrophes agissent sur les nitrites présents dans l'eau contenue dans le réacteur biologique séquentiel 10 pour former du diazote gazeux en consommant le substrat carboné présent dans le réacteur biologique séquentiel 10.

L'étape anoxie de dénitritation comprend une étape d'apport ou de dopage en carbone dans le réacteur biologique séquentiel 10 (étape 65). Cet apport en carbone est contrôlé (étape 66). Au cours du contrôle de l'apport en carbone, l'armoire de commande 20 compare la concentration en nitrites avec une cinquième valeur seuil S5 prédéterminée égale à 4 mgN-NO₂/L.

Dès que la concentration en nitrites est inférieure à cette cinquième valeur seuil S5, l'armoire de commande pilote la pompe 19 de manière à ce que l'injection de carbone dans le réacteur biologique séquentiel 10 soit stoppée (étape 67). Le carbone injecté peut se présenter sous la forme d'un liquide, d'une solution de méthanol, d'éthanol ou de glycérol ou de tout autre substrat carboné.

La durée de l'étape anoxie de dénitritation est contrôlée (étape 68). Au cours de ce contrôle, l'armoire de commande 20 compare la concentration en nitrites à une troisième valeur seuil S3 prédéterminée égale à 2 mgN-NO₂/L.

Dès que la concentration en nitrites est inférieure à cette troisième valeur seuil S3 prédéterminée, l'armoire de commande 20 pilote l'arrêt de l'étape anoxie de dénitritation.

De nouvelles étapes d'alimentation, de nitritation aérée puis de dénitritation anoxie sont mises en oeuvre de façon à traiter une nouvelle portion du volume total d'eau à traiter. Dans ce mode de réalisation, le procédé de traitement comprend donc plusieurs sous-cycles comprenant chacun une étape d'alimentation, une étape de nitritation aérée et une étape de dénitritation anoxie. Une pluralité de sous-cycles est mise en oeuvre jusqu'à ce que le niveau haut 28 du réacteur biologique 10 soit atteint (étape 69), le dernier sous-cycle étant mis en oeuvre pour traiter le dernier volume d'eau introduit dans le réacteur 10 pour que celui-ci soit plein.

Dès que l'ensemble du volume d'eau est traité, c'est-à-dire que le niveau haut 28 du réacteur biologique 10 est atteint (étape 69) et que le dernier sous-cycle est terminé (étape 70 à 75), l'agitation au sein du réacteur biologique séquentiel 10 est arrêtée, en sorte que l'eau contenue dans ce réacteur subit une décantation (étape 76). Les matières en suspension sont alors séparées de l'eau traitée. La décantation terminée, les phases d'extraction ou de vidange d'eau et de boues commencent (étape 77). Les boues formées au cours de cette décantation sont extraites du réacteur via la canalisation d'extraction 23. La vidange du SBR n'est jamais totale. Au contraire, le principe est de conserver une partie des boues après décantation. L'aération du réacteur ne se fait donc jamais à vide. L'eau traitée est extraite du réacteur via la canalisation d'extraction 24.

Dans ce mode de réalisation, un cycle complet de traitement, c'est-à-dire un cycle permettant le traitement de l'ensemble du volume d'eau à traiter (volume défini par le niveau haut 28 du réacteur 10) comprend donc plusieurs sous-cycles (alimentation, nitritation aérée et dénitritation anoxie), une décantation et une extraction d'eau traitée et de boues. L'extraction de boues permet de contrôler l'âge de boue du procédé.

Dans ce mode de réalisation, l'alimentation en eau et l'aération du réacteur sont contrôlées notamment à partir de la concentration en acide nitreux dans le réacteur de façon à limiter la production de protoxyde d'azote. Dans une variante, seule la durée de l'étape aérée de nitritation pourra être contrôlée en fonction de cette donnée.

Dans une variante, l'ensemble du volume d'eau à traiter pourra être introduit dans le réacteur biologique séquentiel 10 en une seule fois. Dans ce cas, un seul sous-cycle sera mis en oeuvre.

### 7.3.1.2 Cas d'un effluent contenant de la DCO biodégradable

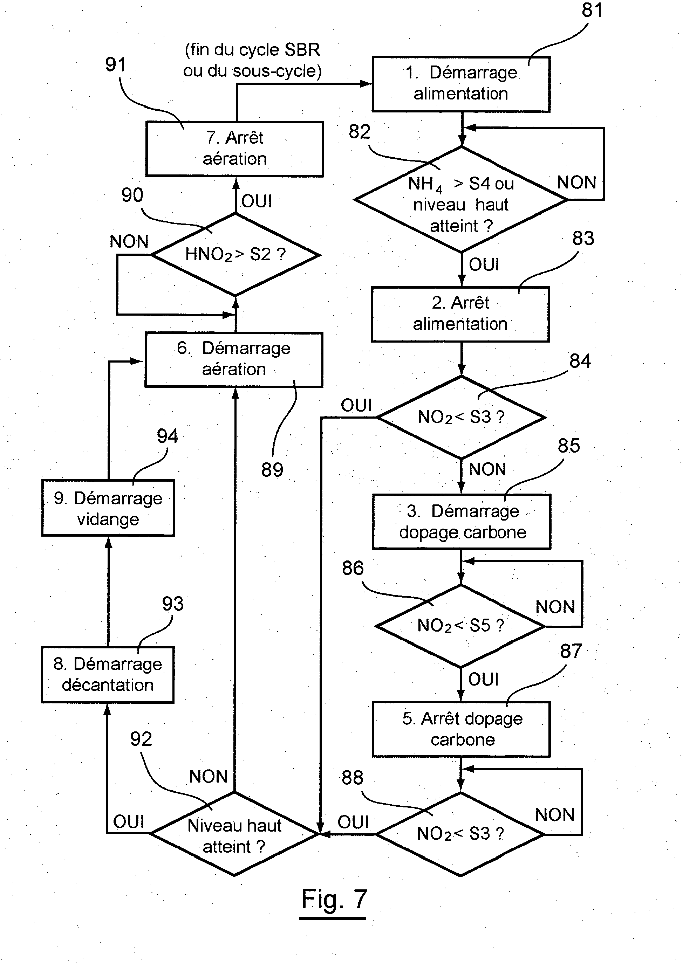

Un procédé selon l'invention de traitement d'une eau chargée en azote sous forme d'ammonium et chargée en DCO biodégradable mettant en oeuvre un processus de type shunt des nitrates va à présent être décrit en relation avec la figure 7.

Selon ce mode de réalisation, le procédé de traitement consiste à traiter l'éau par portions successives du volume total à traiter.

Selon un tel procédé, le réacteur biologique séquentiel 10 est alimenté en eau à traiter (étape 81). Pour cela, l'armoire de commande 20 pilote la mise en oeuvre de la pompe 13 en sorte qu'une portion du volume total d'eau à traiter contenue dans la cuve tampon 11 soit déversée via la canalisation d'alimentation 12 dans le réacteur biologique séquentiel 10.

Le réacteur séquentiel 10 n'est pas aéré au cours de son alimentation.

On observe alors une activité des bactéries hétérotrophes à l'intérieur du réacteur biologique séquentiel 10. L'eau à traiter contenue dans le réacteur biologique séquentiel 10 subit ainsi une étape anoxie de dénitritation.

La concentration en ammonium est mesurée et le niveau d'eau dans le réacteur séquentiel 10 est contrôlé par la mise en oeuvre de l'armoire de commande 20, de la sonde d'ammonium 21 et du capteur de niveau 28.

L'alimentation en eau du réacteur est contrôlée (étape 82). Au cours de ce contrôle de l'alimentation, l'armoire de commande 20:
- compare la concentration en ions ammonium à une quatrième valeur seuil S4 égale à 80mgN-NH4/L ;
- vérifie si le niveau d'eau dans le réacteur a atteint le niveau haut.

Dès que la concentration en ions ammonium est supérieure à la quatrième valeur seuil S4, ou que le niveau haut de réacteur séquentiel 10 est atteint, l'armoire de commande 20 stoppe le fonctionnement de la pompe 13 en sorte que l'alimentation en eau à traiter du réacteur biologique séquentiel 10 est arrêtée (étape 83).

Au cours de la dénitritation, les bactéries hétérotrophes agissent sur les nitrites présents dans l'eau contenue dans le réacteur biologique séquentiel 10 pour former du diazote gazeux en consommant le substrat carboné présent dans le réacteur biologique séquentiel 10.

L'étape anoxie de dénitritation comprend éventuellement une étape d'apport ou de dopage en carbone dans le réacteur biologique séquentiel 10 (étape 85). L'activation de cette étape d'apport en carbone est contrôlée (étape 84). Afin d'activer ou non l'étape d'apport en carbone, l'armoire de commande mesure la concentration en nitrites dans le réacteur séquentiel 10 par la mise en oeuvre de la sonde nitrites 22. Elle compare la concentration en nitrites à une troisième valeur seuil S3 égale à 2mgN-NO2/L. Si la concentration en nitrites est supérieure à cette troisième valeur seuil S3, l'apport en substrat carboné est mis en oeuvre. Sinon, l'apport en substrat carboné n'est pas mis en oeuvre et l'aération du réacteur séquentiel 10 est alors mis en oeuvre si le niveau haut dans le réacteur n'est pas atteint, ou le démarrage de la décantation si le niveau haut dans le réacteur est atteint.

Cet apport en carbone est contrôlé (étape 86). Au cours du contrôle de l'apport en carbone, l'armoire de commande 20 compare la concentration en nitrites avec une cinquième valeur seuil S5 prédéterminée égale à 4 mgN-NO₂/L.

Dès que la concentration en nitrites est inférieure à cette cinquième valeur seuil S5, l'armoire de commande pilote la pompe 19 de manière à ce que l'injection de carbone dans le réacteur biologique séquentiel 10 soit stoppée (étape 87). Le carbone injecté peut se présenter sous la forme d'un liquide, d'une solution de méthanol, d'éthanol ou de glycérol ou de tout autre substrat carboné.

La durée de l'étape anoxie de dénitritation est contrôlée (étape 88). Au cours de ce contrôle, l'armoire de commande 20 compare la concentration en nitrites à une troisième valeur seuil S3 prédéterminée égale à 2 mgN-NO₂/L.

Dès que la concentration en nitrites est inférieure à cette troisième valeur seuil S3 prédéterminée, l'armoire de commande 20 pilote l'arrêt de l'étape anoxie de dénitritation.

L'armoire de commande 20 pilote alors la mise en oeuvre du surpresseur 14 et de la vanne de régulation d'oxygène 26 en sorte que de l'oxygène soit introduit dans le réacteur biologique séquentiel 10 via la canalisation 15 et les diffuseurs d'air 16 : le réacteur est aéré (étape 89).

On observe alors une activité des bactéries AOB à l'intérieur du réacteur biologique séquentiel 10. L'eau à traiter contenue dans le réacteur biologique séquentiel 10 subit ainsi une étape aérée de nitritation.

Au cours de la nitritation, les bactéries AOB agissent sur les ions ammonium présents dans l'eau contenue dans le réacteur biologique séquentiel 10 pour former des nitrites en consommant de l'oxygène.

Le pH, la température et les concentrations en nitrites, en ammonium et en oxygène de l'effluent contenu dans le réacteur 10 sont mesurés en ligne par la mise en oeuvre de l'armoire de commande 20, des sondes de nitrites 22, d'ammonium 21, de pH 29, de température 30 et d'oxygène 25. Dans une variante, ces mesures pourront ne pas être effectuées en continu, mais par exemple à fréquence régulière. À partir de la concentration en nitrites, du pH et de la température, l'armoire de commande 20 calcule la concentration de l'effluent en acide nitreux selon la formule :

[*HNO*₂] = [*NO*₂⁻]×10^{-*pH*}×e^{2300/(273+*T*)}

avec T en °C, HNO₂ et NO₂ en mgN/L.

Dans une variante, la concentration en acide nitreux pourra être calculée selon la formule suivante :

[*HNO*₂] = [*NO*₂⁻]×10^{-pH}×10*^{pKa}*

pour une température donnée.

La durée de l'étape aérée de nitritation est contrôlée (étape 90). Au cours de ce contrôle, l'armoire de commande 20 compare la concentration en HNO₂ à la deuxième valeur seuil S2 prédéterminée égale à 1.5 µgN-HNO₂/L.

Dès que la concentration en HNO₂ est supérieure à ladite deuxième valeur seuil S2 prédéterminée, l'armoire de commande pilote le surpresseur 14 et la vanne de régulation d'oxygène 26 en sorte qu'il ne délivre plus d'oxygène à l'intérieur du réacteur biologique séquentiel 10. Par conséquent, l'étape aérée de nitritation prend fin (étape 91).

De nouvelles étapes d'alimentation, de dénitritation anoxie puis de nitritation aérée sont mises en oeuvre de façon à traiter une nouvelle portion du volume total d'eau à traiter. Dans ce mode de réalisation, le procédé de traitement comprend donc plusieurs sous-cycles comprenant chacun une étape d'alimentation, une étape de dénitritation anoxie et une étape de nitritation aérée. Une pluralité de sous-cycles est mise en oeuvre jusqu'à ce que le niveau haut 28 du réacteur biologique 10 soit atteint (étape 92), le dernier sous-cycle étant mis en oeuvre pour traiter le dernier volume d'eau introduit dans le réacteur 10 pour que celui-ci soit plein.

Dès que l'ensemble du volume d'eau est traité, c'est-à-dire que le niveau haut 28 du réacteur biologique 10 est atteint (étape 92) et que le dernier sous-cycle est terminé, l'agitation au sein du réacteur biologique séquentiel 10 est arrêtée, en sorte que l'eau contenue dans ce réacteur subit une décantation (étape 93). Les matières en suspension sont alors séparées de l'eau traitée. La décantation terminée, les phases d'extraction ou de vidange d'eau et de boues commencent (étape 94). Les boues formées au cours de cette décantation sont extraites du réacteur via la canalisation d'extraction 23. La vidange du SBR n'est jamais totale. Au contraire, le principe est de conserver une partie des boues après décantation. L'aération du réacteur ne se fait donc jamais à vide. L'eau traitée est extraite du réacteur via la canalisation d'extraction 24.

Dans ce mode de réalisation, un cycle complet de traitement, c'est-à-dire un cycle permettant le traitement de l'ensemble du volume d'eau à traiter (volume défini par le niveau haut 28 du réacteur 10) comprend donc plusieurs sous-cycles (alimentation, dénitritation anoxie et nitratation aérée), une décantation et une extraction d'eau traitée et de boues. L'extraction de boues permet de contrôler l'âge de boue du procédé.

Dans une variante, l'ensemble du volume d'eau à traiter pourra être introduit dans le réacteur biologique séquentiel 10 en une seule fois. Dans ce cas, un seul sous-cycle sera mis en oeuvre.

Dans ce mode de réalisation, l'alimentation en eau et l'aération du réacteur sont contrôlées notamment à partir de la concentration en acide nitreux dans le réacteur de façon à limiter la production de protoxyde d'azote. Dans une variante, seule la durée de l'étape aérée de nitritation pourra être contrôlée en fonction de cette donnée.

### 7.3.2. Configuration Nitritation-Déammonification

### 7.3.2.1 Cas d'un effluent non carencé en Alcalinité

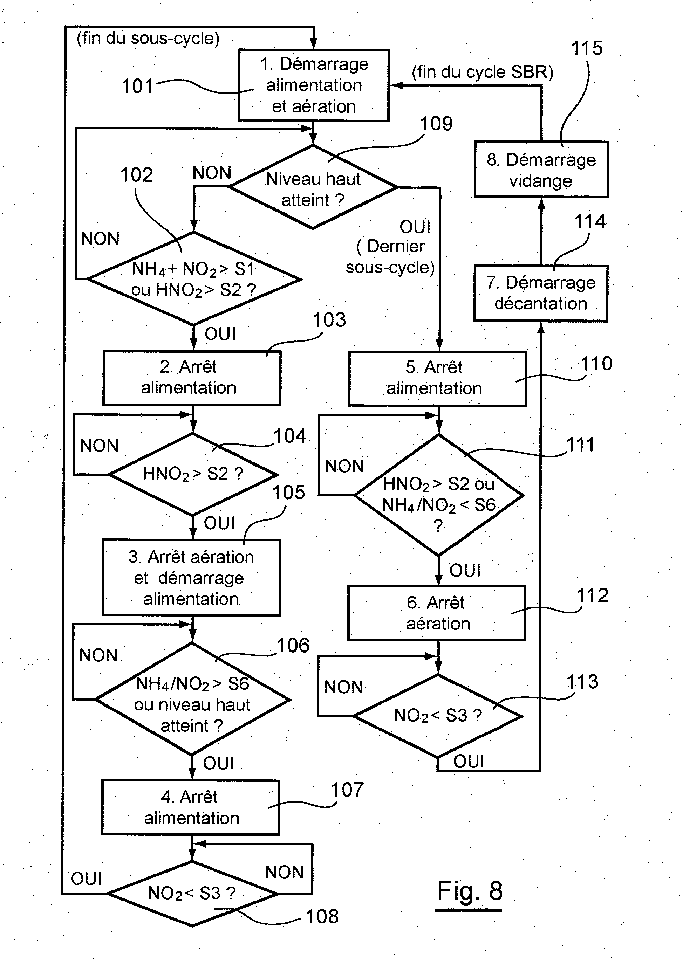

Un procédé selon l'invention de traitement d'une eau chargée en azote sous forme d'ammonium non carencée en alcalinité, mettant en oeuvre un processus de type nitritation/déammonification par des bactéries anammox dans un seul réacteur biologique séquentiel va à présent être décrit en référence à la figure 8.

Selon ce mode de réalisation, le procédé de traitement consiste à traiter l'eau par portions successives du volume total à traiter.

Selon un tel procédé, le réacteur biologique séquentiel 10 est alimenté en eau à traiter au cours d'une première étape d'alimentation (étape 101). Pour cela, l'armoire de commande 20 pilote la mise en oeuvre de la pompe 13 en sorte qu'une portion du volume total d'eau à traiter contenue dans la cuve tampon 11 soit déversée via la canalisation d'alimentation 12 dans le réacteur biologique séquentiel 10.

L'armoire de commande 20 pilote en parallèle la mise en oeuvre du surpresseur 14 et de la vanne de régulation d'oxygène 26 en sorte que de l'oxygène soit introduit dans le réacteur biologique séquentiel 10 via la canalisation 15 et les diffuseurs d'air 16. Le réacteur est aéré (étape 101).

On observe alors une activité des bactéries AOB à l'intérieur du réacteur biologique séquentiel 10. L'eau à traiter contenue dans le réacteur biologique séquentiel 10 subit ainsi une étape aérée de nitritation dans laquelle sont impliquées les bactéries AOB.

Au cours de la nitritation, les bactéries AOB agissent sur l'ammonium présent dans l'eau contenue dans le réacteur biologique séquentiel 10 pour former des nitrites en consommant de l'oxygène.

Le pH, la température et les concentrations en nitrites, en ammonium et en oxygène de l'effluent contenu dans le réacteur 10 sont mesurés en ligne par la mise en oeuvre de l'armoire de commandes 20, des sondes de nitrites 22, d'ammonium 21, de pH 29, de température 30 et d'oxygène 25. La sonde de nitrites 22 permet de mesurer en ligne la concentration en nitrites de l'eau contenue dans le réacteur biologique séquentiel 10. La sonde de mesure d'ammonium 21 permet de mesurer en ligne la concentration en ammonium de l'eau contenue dans le réacteur biologique séquentiel 10.

À partir de la concentration en nitrites, du pH et de la température, l'armoire de commande 20 calcul la concentration de l'éffluent en acide nitreux selon la formule :

[*HNO₂*] = [*NO₂*⁻]×10^{-*pH*} × *e*^{2300/(273+*T*)}

avec T en °C, HNO₂ et NO₂ en mgN/L.

Dans une variante, la concentration en acide nitreux pourra être calculée selon la formule suivante:

[*HNO₂*] = [*NO₂*⁻] × 10^{-pH} × 10*^{pKa}*

pour une température donnée.

L'alimentation en eau du réacteur est contrôlée (étape 102). Au cours de ce contrôle de l'alimentation, l'armoire de commande 20:
- calcule la somme de la concentration en nitrites et de la concentration en ammonium ;
- compare la somme à une première valeur seuil S1 égale à 90mgN/L;
- compare la concentration en acide nitreux à une deuxième valeur seuil S2 égale à 1,5µgN-HNO₂/L ;
- vérifie le niveau d'eau dans ledit réacteur.

Dès que cette somme est supérieure à la première valeur seuil, ou que la concentration en acide nitreux est supérieure à la deuxième valeur seuil S2, ou que l'eau dans le réacteur a atteint le niveau haut, l'armoire de commande 20 stoppe le fonctionnement de la pompe 13 en sorte que l'alimentation en eau à traiter du réacteur biologique séquentiel 10 est arrêtée (étape 103).

La durée de l'étape aérée de nitritation est contrôlée (étape 104). Au cours de ce contrôle, l'armoire de commande 20 compare la concentration en HNO₂ à la deuxième valeur seuil S2 égale à 1.5µgN-HNO₂/L.

Dès que la concentration en HNO₂ est supérieure à ladite deuxième valeur seuil S2 prédéterminée, l'armoire de commande pilote le surpresseur 14 et la vanne de régulation d'oxygène 26 en sorte qu'il ne délivre plus d'oxygène à l'intérieur du réacteur biologique séquentiel 10. Par conséquent, l'étape aérée de nitritation prend fin (étape 105).

Une deuxième alimentation, sans aération, est effectuée (étape 105). La deuxième alimentation en eau du réacteur est contrôlée (étape 106). Au cours de ce contrôle de l'alimentation, l'armoire de commande 20:
- calcule le ratio concentration en ammonium sur concentration en nitrites ;
- compare le ratio à ladite sixième valeur S6 seuil égale à 0,8 ;
- vérifie le niveau d'eau dans le réacteur.

Dès que ce ratio est supérieur à ladite sixième valeur seuil S6, ou que l'eau dans le réacteur a atteint le niveau haut, l'armoire de commande 20 stoppe le fonctionnement de la pompe 13 en sorte que l'alimentation en eau à traiter du réacteur biologique séquentiel 10 est arrêtée (étape 107).

Les concentrations en ammonium et en nitrites sont alors propices au traitement de l'ammonium et des nitrites contenus dans l'effluent. On observe alors une activité des bactéries anammox à l'intérieur du réacteur biologique séquentiel 10. L'eau à traiter contenue dans le réacteur biologique séquentiel 10 subit ainsi une étape anoxie de déammonification.

Au cours des phases anoxies, les bactéries anammox agissent sur l'ammonium et sur les nitrites présents dans l'eau pour former du diazote gazeux.

La durée de l'étape anoxie de déammonification est contrôlée (étape 108). Au cours de ce contrôle, l'armoire de commande 20 compare la concentration en nitrites à ladite troisième valeur seuil S3 prédéterminée égale à 2 mgN-NO₂/L

Dès que la concentration en nitrites est inférieure à cette troisième valeur seuil S3 prédéterminée, l'armoire de commande 20 pilote l'arrêt de l'étape anoxie de déammonification.

De nouvelles premières étapes d'alimentation, de nitritation aérée, de deuxième alimentation puis de déammonification anoxie sont mises en oeuvre de façon à traiter une nouvelle portion du volume total d'eau à traiter. Dans ce mode de réalisation, le procédé de traitement comprend donc plusieurs sous-cycles comprenant chacun une première étape d'alimentation, une étape de nitritation aérée, une deuxième étape d'alimentation non aérée et une étape de déammonification anoxie. Une pluralité de sous-cycles est mise en oeuvre jusqu'à ce que le niveau haut 28 du réacteur biologique 10 soit atteint lors d'une étape d'alimentation aérée ou non aérée (étape 101 ou 105). Ce niveau haut stoppe l'alimentation (étape 106 ou 109). Le reste du sous-cycle initié par l'alimentation est mis en oeuvre (étapes 108 à 112) : réalisation d'une étape aérée de nitritation suivi d'une étape anoxie de déammonification.

La durée de cette dernière étape de nitritation aérée est contrôlée (étape 111). Au cours de ce contrôle, l'armoire de commande 20 :
- calcule le ratio entre la concentration en ions ammonium et la concentration en nitrites ;
- compare ce ratio à la sixième valeur seuil S6 égale à 0,8 ;
- compare la concentration en HNO₂ à la deuxième valeur seuil S2 égale à 1.5µgN - HNO₂L.

Dès que la concentration en HNO₂ est supérieure à ladite deuxième valeur seuil S2 prédéterminée, ou que le ratio est inférieur à la sixième valeur seuil S6, l'armoire de commande pilote le surpresseur 14 et la vanne de régulation d'oxygène 26 en sorte qu'il ne délivre plus d'oxygène à l'intérieur du réacteur biologique séquentiel 10. Par conséquent, la dernière étape aérée de nitritation prend fin (étape 112). La dernière étape anoxie de déammonification débute. Elle prendra fin dès que la concentration en nitrites sera inférieure à la troisième valeur seuil S3 égale à 2 mgN-NO₂/L.

Dès que l'ensemble du volume d'eau est traité, c'est-à-dire que le niveau haut 28 du réacteur biologique 10 est atteint (étape 109) et que les dernières phases aérée de nitritation et anoxique de déammonification ont eu lieu (étapes 110. à 113), l'agitation au sein du réacteur biologique séquentiel 10 est arrêtée, en sorte que l'eau contenue dans ce réacteur subisse une décantation (étape 114). Les matières en suspension dans l'eau sont alors séparées de l'eau. Le réacteur est vidangé (étape 115) : les boues formées au cours de cette décantation sont extraites du réacteur via la canalisation d'extraction 23, et l'eau traitée est extraite du réacteur via la canalisation d'extraction 24. La vidange du SBR n'est jamais totale. Au contraire, le principe est de conserver une partie des boues après décantation. L'aération du réacteur ne se fait donc jamais à vide.

Dans ce mode de réalisation, un cycle complet de traitement comprend donc au moins un sous-cycle (première alimentation, nitritation aérée, deuxième alimentation non aérée et déammonification anoxie), une décantation et une extraction d'eau traitée et de boues. L'extraction de boues permet de contrôler l'âge de boue du procédé.

Dans une variante, l'ensemble du volume d'eau à traiter pourra être introduit dans le réacteur biologique séquentiel 10 en deux fois mettant en oeuvre qu'un seul sous-cycle.

Dans ce mode de réalisation, l'alimentation en eau et l'aération du réacteur sont contrôlées notamment à partir de la concentration en acide nitreux dans le réacteur de façon à limiter la production de protoxyde d'azote. Dans une variante, seule la durée de l'étape aérée de nitritation pourra être contrôlée en fonction de cette donnée.

### 7.3.2.2 Cas d'un effluent carencé en Alcalinité

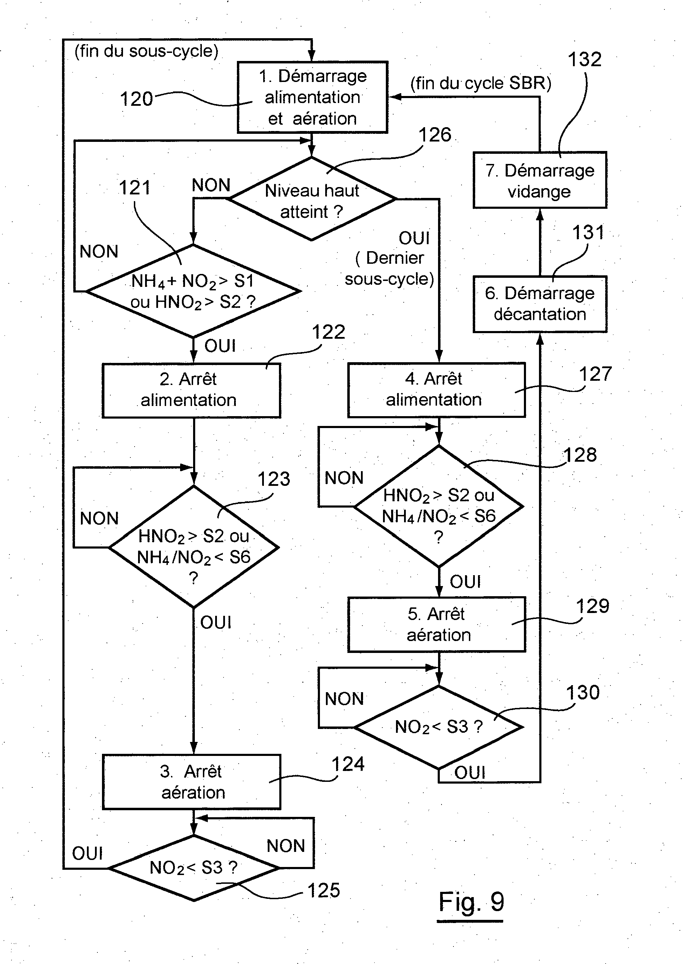

Un procédé selon l'invention de traitement d'une eau chargée en azote sous forme d'ammonium et carencée en alcalinité, mettant en oeuvre un processus de type nitritation-déammonification par des bactéries anammox dans un seul réacteur biologique séquentiel va à présent être décrit en relation avec la figure 9.

Dans cet exemple, l'effluent est carencé en alcalinité de telle manière que la nitritation totale de l'ammoniaque en nitrite n'est pas possible, la quantité d'alcalinité disponible dans l'effluent n'étant pas suffisant pour conserver un pH permettant aux bactéries AOB de fonctionner.

Selon ce mode de réalisation, le procédé de traitement consiste à traiter l'eau par portions successives du volume total à traiter.

Selon un tel procédé, le réacteur biologique séquentiel 10 est alimenté en eau à traiter (étape 120). Pour cela, l'armoire de commande 20 pilote la mise en oeuvre de la pompe 13 en sorte qu'une portion du volume total d'eau à traiter contenue dans la cuve tampon 11 soit déversée via la canalisation d'alimentation 12 dans le réacteur biologique séquentiel 10.

L'armoire de commande 20 pilote en parallèle la mise en oeuvre du surpresseur 14 et de la vanne de régulation d'oxygène 26 en sorte que de l'oxygène soit introduit dans le réacteur biologique séquentiel 10 via la canalisation 15 et les diffuseurs d'air 16. Le réacteur est aéré (étape 120)

On observe alors une activité des bactéries AOB à l'intérieur du réacteur biologique séquentiel 10. L'eau à traiter contenue dans le réacteur biologique séquentiel 10 subit ainsi une étape aérée de nitritation dans laquelle sont impliquées les bactéries AOB.

Au cours de la nitritation, les bactéries AOB agissent sur l'ammonium présent dans l'eau contenue dans le réacteur biologique séquentiel 10 pour former des nitrites en consommant de l'oxygène.

Le pH, la température et les concentrations en nitrites, en ammonium et en oxygène de l'effluent contenu dans le réacteur 10 sont mesurés en ligne par la mise en oeuvre de l'armoire de commandes 20, des sondes de nitrites 22, d'ammonium 21, de pH 29, de température 30 et d'oxygène 25. La sonde de nitrites 22 permet de mesurer en ligne la concentration en nitrites de l'eau contenue dans le réacteur biologique séquentiel 10. La sonde de mesure d'ammonium 21 permet de mesurer en ligne la concentration en ammonium de l'eau contenue dans le réacteur biologique séquentiel 10.

À partir de la concentration en nitrites, du pH et de la température, l'armoire de commande 20 calcul la concentration de l'effluent en acide nitreux selon la formule :

[*HNO*₂] = [*NO*₂⁻]×10^{-*pH*} × *e*^{2300/(273+*T*)}

avec T en °C, HNO₂ et NO₂ en mgN/L.

Dans une variante, la concentration en acide nitreux pourra être calculée selon la formule suivante :

[*HNO*₂] = [*NO*₂⁻] × 10^{-pH} × 10*^{pKa}*

pour une température donnée.

L'alimentation en eau du réacteur est contrôlée (étape 121). Au cours de ce contrôle de l'alimentation, l'armoire de commande 20 :
- calcule la somme de la concentration en nitrites et de la concentration en ammonium ;
- compare la somme à une première valeur seuil S1 égale à 90 mgN/L ;
- compare la concentration en acide nitreux à une deuxième valeur seuil S2 prédéterminée égale à 1.5µgN-HNO₂L ;
- vérifie le niveau d'eau dans ledit réacteur.

Dès que cette somme est supérieure à la première valeur seuil S1, ou que la concentration en acide nitreux est supérieure à la deuxième valeur seuil S2, ou que l'eau dans le réacteur a atteint le niveau haut, l'armoire de commande 20 stoppe le fonctionnement de la pompe 13 en sorte que l'alimentation en eau à traiter du réacteur biologique séquentiel 10 est arrêtée (étape 122).

La durée de l'étape aérée de nitritation est contrôlée (étape 123). Au cours de ce contrôle, l'armoire de commande 20:
- compare la concentration en acide nitreux à la deuxième valeur seuil S2 prédéterminée égale à 1.5µgN-HNO₂/L;
- calcule le ratio concentration en ammonium sur concentration en nitrites et le compare à une sixième valeur seuil S6 égale à 0,8.

Dès que la concentration en HNO₂ est supérieure à ladite deuxième valeur seuil S2 prédéterminée ou que le ratio concentration en ammonium sur concentration en nitrites est inférieur à ladite sixième valeur seuil S6, l'armoire de commande pilote le surpresseur 14 et la vanne de régulation d'oxygène 26 en sorte qu'il ne délivre plus d'oxygène à l'intérieur du réacteur biologique séquentiel 10. Par conséquent, l'étape aérée de nitritation prend fin (étape 124).

Les concentrations en ammonium et en nitrites sont alors propices au traitement de l'ammonium et des nitrites contenus dans l'effluent. On observe alors une activité des bactéries anammox à l'intérieur du réacteur biologique séquentiel 10. L'eau à traiter contenue dans le réacteur biologique séquentiel 10 subit ainsi une étape anoxie de déammonification.

Au cours des phases anoxies, les bactéries anammox agissent sur l'ammonium et sur les nitrites présents dans l'eau pour former du diazote gazeux.

La durée de l'étape anoxie de déammonification est contrôlée (étape 125). Au cours de ce contrôle, l'armoire de commande 20 compare la concentration en nitrites à ladite troisième valeur seuil S3 prédéterminée égale à 2 mgN-NO₂/L

Dès que la concentration en nitrites est inférieure à cette troisième valeur seuil S3 prédéterminée, l'armoire de commande 20 pilote l'arrêt de l'étape anoxie de déammonification.

De nouvelles étapes d'alimentation, de nitritation aérée puis de déammonification anoxie sont mises en oeuvre de façon à traiter une nouvelle portion du volume total d'eau à traiter. Dans ce mode de réalisation, le procédé de traitement comprend donc plusieurs sous-cycles comprenant chacun une étape d'alimentation, une étape de nitritation aérée et une étape de déammonification anoxie. Une pluralité de sous-cycles est mise en oeuvre jusqu'à ce que le niveau haut 28 du réacteur biologique 10 soit atteint (étape 126) pendant une étape d'alimentation. Ce niveau haut stoppe l'alimentation (étape 127). Le reste du sous-cycle initié par l'alimentation est mis en oeuvre (étapes 128 à 130) : réalisation d'une étape aérée de nitritation suivi d'une étape anoxie de déammonification.

Dès que l'ensemble du volume d'eau est traité, c'est-à-dire que le niveau haut 28 du réacteur biologique 10 est atteint et que les dernières phases aérée de nitritation et anoxique de déamonification ont eu lieu, l'agitation au sein du réacteur biologique séquentiel 10 est arrêtée, en sorte que l'eau contenue dans ce réacteur subisse une décantation (étape 131). Les matières en suspension dans l'eau sont alors séparées de l'eau. Le réacteur est ensuite vidangé (étape 132) : les boues formées au cours de cette décantation sont extraites du réacteur via la canalisation d'extraction 23 et l'eau traitée est extraite du réacteur via la canalisation d'extraction 24. La vidange du SBR n'est jamais totale. Au contraire, le principe est de conserver une partie des boues après décantation. L'aération du réacteur ne se fait donc jamais à vide.

Dans ce mode de réalisation, un cycle complet de traitement comprend donc au moins un sous-cycle (alimentation, nitritation aérée, déammonification anoxie), une décantation et une extraction d'eau traitée et de boues. L'extraction de boues permet de contrôler l'âge de boue du procédé.

Dans une variante, l'ensemble du volume d'eau à traiter pourra être introduit dans le réacteur biologique séquentiel 10 en une seule fois.

Dans ce mode de réalisation, l'alimentation en eau et l'aération du réacteur sont contrôlées notamment à partir de la concentration en acide nitreux dans le réacteur de façon à limiter la production de protoxyde d'azote. Dans une variante, seule la durée de l'étape aérée de nitritation pourra être contrôlée en fonction de cette donnée.

### 7.4. Variantes

La comparaison de chaque grandeur mesurée au moyen d'une sonde avec seuil de valeur prédéterminé est préférentiellement doublée d'une temporisation de sécurité. La mise en oeuvre de telles temporisations de sécurité permet de continuer le déroulement du procédé quand bien même une ou plusieurs sondes seraient temporairement défectueuses ou un ou plusieurs seuils de valeur ne seraient jamais atteints lors de comparaison(s) avec des données mesurées.

### 7.5. Essais

Des essais ont été réalisés pour attester l'efficacité d'une technique selon l'invention.

Ces essais ont consisté à traiter au sein d'un RBS de 500 litres un effluent contenant très peu de DCO biodégradable par shunt des nitrates.

Toutes les étapes du traitement ont été réalisées dans un même réacteur de manière séquencée. La température était de 25°C et la concentration en oxygène dissous pendant les phases aérées était faible (0,5 mgO₂/L) afin de favoriser le shunt dans le RBS. Ce RBS était alimenté par les filtrats de la table d'égouttage issu de la déshydratation des boues digérées d'un digesteur anaérobie d'une station d'épuration. La composition moyenne du filtrat est présentée dans le tableau ci-dessous.

| | **N-NH₄ (mgN/L)** | **DCO soluble (mg/L)** | **P-PO₄³(mgP/L)** | **MES (mg/L)** | **TAC (°F)** | **pH** |
|---|---|---|---|---|---|---|
| **Mini** | 239 | 96 | 90 | 38 | 107 | 7,4 |
| **Maxi** | 721 | 218 | 145 | 1568 | 281 | 8,1 |
| **Moyenne** | **466** | **147** | **109** | **216** | **163** | **7,68** |
| **Ecart type** | 127 | 24,2 | 12,2 | 284 | 43 | 0,2 |
| ***Nombre d'échantillons*** | *88* | *53* | *22* | *37* | *24* | *23* |

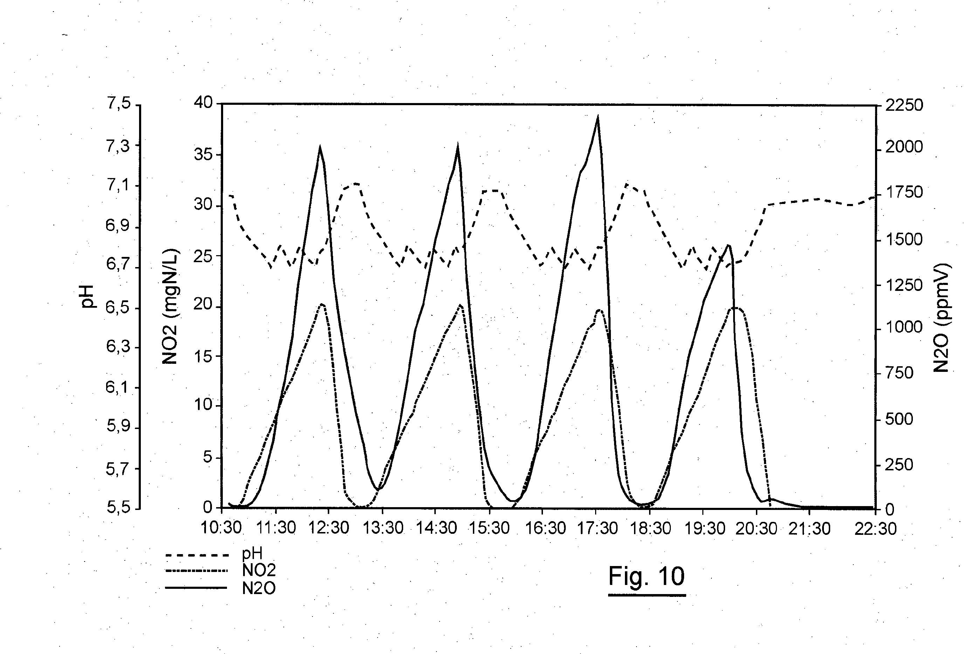

La figure 10 illustre les profils des concentrations en NO_{2;} et N₂O et du pH lors d'un cycle complet RBS au cours d'un traitement classique de cette eau par nitritation-dénitritation avec injection soude dans le réacteur afin que le pH ne descende pas en dessous de 6.7 et limite l'activité des bactéries nitritantes. La production de N₂O durant ce cycle est de 0.09 gN-N₂O/gN-NH4 abattu soit 9% et a atteint plus de 2000 ppmv.

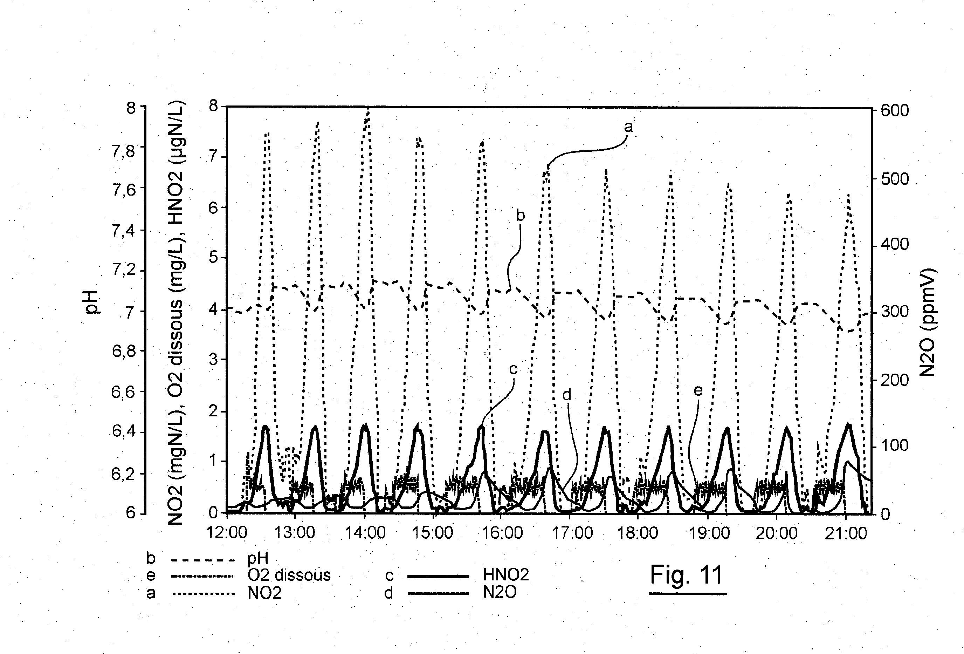

La figure 11 illustre les profils des concentrations en NO₂, HNO₂, N₂O, O₂ et du pH lors d'un cycle complet RBS avec un seuil HNO₂ S2 égale à 1.5 µgN-HNO₂/L. La production de N₂O durant ce cycle était de 0.002 gN-N₂O/gN-NH4 abattu soit 0.2% et est toujours inférieure à 100 ppmv sans injection de soude dans le réacteur pour contrôler le pH.

La mise en oeuvre de la technique selon l'invention permet donc de traiter une eau par nitritation-dénitritation tout en limitant la production de protoxyde d'azote et l'ajout de réactifs basifiants:

## Revendications

1. Procédé de traitement d'une eau chargée en azote sous forme d'ammonium au sein d'un réacteur biologique séquentiel (10) de type « shunt des nitrates » et/ou « nitritation-déammonification », ledit procédé comprenant au moins :
- une première étape (i) d'alimentation en ladite eau dudit réacteur biologique séquentiel (10) ;
- une étape (ii) aérée de nitritation ;
- une étape (iii) anoxie de dénitritation ;
- une étape (iv) d'extraction d'une eau traitée dudit réacteur ;
**caractérisé en ce qu'**il comprend en outre une mesure en ligne de la concentration en nitrites de ladite eau présente dans ledit réacteur, une étape de mesure du pH de ladite eau contenue dans ledit réacteur, une étape de calcul de la concentration en acide nitreux (HNO₂) de ladite eau contenue dans ledit réacteur en fonction de ladite concentration en nitrites et dudit pH, et une étape de contrôle de la durée de ladite étape (ii) aérée de nitritation comprenant les étapes suivantes :
- comparaison de ladite concentration en acide nitreux à une valeur seuil prédéterminée S2,
- arrêt de ladite étape (ii) aérée de nitritation dès que ladite concentration en acide nitreux devient supérieure à ladite valeur S2 prédéterminée.

2. Procédé selon la revendication 1, **caractérisé en ce qu'**il comprend une mesure en ligne de la concentration en ions ammonium de ladite eau présente dans ledit réacteur (10) et une étape de contrôle de ladite première étape (i) d'alimentation dudit réacteur (10), ladite étape de contrôle de ladite première étape (i) d'alimentation comprenant les étapes suivantes :
- calcul de la somme de ladite concentration en nitrites et de ladite concentration en ammonium ;
- comparaison de ladite somme à une valeur seuil S1 prédéterminée ;
- comparaison de ladite concentration en acide nitreux à la valeur seuil S2 prédéterminée ;
- vérification du niveau d'eau dans ledit réacteur ;
- arrêt de ladite première étape (i) d'alimentation dès que ladite somme est supérieure à une valeur seuil S1 ou que ladite concentration en acide nitreux devient supérieure à ladite valeur seuil S2 ou que le niveau haut dudit réacteur est atteint.

3. Procédé selon l'une quelconque des revendications 1 à 2, **caractérisé en ce qu'**il comprend une étape de contrôle de la durée de ladite étape (iii) anoxie de dénitritation, ladite étape de contrôle de la durée de ladite étape (iii) anoxie de dénitritation comprenant les étapes suivantes :
- comparaison de ladite concentration en nitrites à une valeur seuil S3 prédéterminée ;
- arrêt de ladite étape (iii) anoxie de dénitritation dès que ladite - concentration en nitrites est inférieure à ladite valeur seuil S3 prédéterminée.

4. Procédé selon l'une quelconque des revendications 1 à 3, **caractérisé en ce que** ladite étape (iii) anoxie de dénitritation comprend une étape de mise en contact de ladite eau avec des bactéries hétérotrophes.

5. Procédé selon l'une quelconque des revendications 1 à 4 à l'exception de la revendication 2, **caractérisé en ce qu'**il comprend une mesure en ligne de la concentration en ions ammonium de ladite eau présente dans ledit réacteur (10) et une étape de contrôle de ladite première étape (i) d'alimentation dudit réacteur (10), ladite étape de contrôle de ladite première étape (i) d'alimentation comprenant les étapes suivantes :
- comparaison de ladite concentration en ions ammonium à une valeur seuil S4 prédéterminée ;
- vérification du niveau d'eau dans ledit réacteur ;
- arrêt de ladite première étape (i) d'alimentation dès que ladite concentration en ions ammonium est supérieure à ladite valeur seuil S4 ou dès que le niveau haut dudit réacteur est atteint.

6. Procédé selon la revendication 4 ou 5, **caractérisé en ce que** ladite étape (iii) anoxie de dénitritation comprend une étape d'injection de carbone dans ledit réacteur, et **en ce que** ledit procédé comprend une étape de contrôle de ladite étape d'injection de carbone, ladite étape de contrôle de ladite étape d'injection de carbone comprenant les étapes suivantes :
- comparaison de ladite concentration en nitrites avec une valeur seuil S5 prédéterminée ;
- arrêt de ladite étape d'injection en carbone dès que ladite concentration en nitrites est inférieure à ladite valeur seuil S5.

7. Procédé selon la revendication 5 ou 6, **caractérisé en ce que** ladite valeur seuil S4 est comprise entre 1 mgN-NH₄/L et 400 mgN-NH₄/L.

8. Procédé selon la revendications 6 ou 7, **caractérisé en ce que** ladite valeur seuil S5 est comprise entre 0 mgN-NO₂/L et 120 mgN-NO₂/L.

9. Procédé selon l'une quelconque des revendications 1 à 3, **caractérisé en ce que** ladite étape (iii) anoxie de dénitritation comprend une étape de mise en contact de ladite eau avec des bactéries anammox.

10. Procédé selon la revendication 9, **caractérisé en ce qu'**il comprend une mesure en ligne de la concentration en ions ammonium de ladite eau présente dans ledit réacteur (10), et **en ce que** ladite étape (ii) aérée de nitritation est suivie d'une deuxième étape d'alimentation sans aération, ledit procédé comprenant une étape de contrôle de ladite deuxième étape d'alimentation sans aération qui comprend les étapes suivantes :
- calcul du ratio de ladite concentration en ammonium sur ladite concentration en nitrites ;
- comparaison dudit ratio à une valeur seuil S6 ;
- vérification du niveau haut dudit réacteur;
- arrêt de ladite deuxième étape d'alimentation dès que ledit ratio est supérieur à ladite valeur seuil S6 ou dès que le niveau haut dudit réacteur est atteint.

11. Procédé selon la revendication 9, **caractérisé en ce qu'**il comprend une mesure en ligne de la concentration en ions ammonium de ladite eau présente dans ledit réacteur (10), et **en ce que** ladite étape de contrôle de ladite étape (ii) aérée de nitritation comprend en outre les étapes suivantes :
- calcul du ratio de ladite concentration en ammonium sur ladite concentration en nitrites ;
- comparaison dudit ratio à une valeur seuil S6 ;
- arrêt de ladite étape (ii) aérée de nitritation dès que ladite concentration en acide nitreux est supérieure à ladite valeur seuil S2 prédéterminée ou que ledit ratio est inférieur à ladite valeur seuil S6.

12. Procédé selon la revendication 10, **caractérisé en ce qu'**il comprend plusieurs étapes d'alimentation dudit réacteur séquentiel (10), l'étape d'alimentation aérée à l'issue de laquelle le niveau haut dudit réacteur séquentiel étant atteint constituant une dernière étape d'alimentation, ladité dernière étape d'alimentation étant suivie d'une dernière étape de contrôle de l'aération, ladite dernière étape de contrôle de l'aération comprenant les étapes suivantes :
- comparaison de ladite concentration en acide nitreux à une valeur seuil S2 prédéterminée ;
- calcul du ratio entre ladite concentration en ions ammonium et ladite concentration en nitrites ;
- comparaison dudit ratio à ladite valeur seuil S6 ;
- arrêt de ladite aération dès que ledit ratio est inférieur à ladite valeur seuil S6 ou que ladite concentration en acide nitreux est supérieure à ladite valeur seuil S2.

13. Procédé selon l'une quelconque des revendications 9 à 12, **caractérisé en ce que** ladite valeur seuil S6 est comprise entre 0.6 et 1.2.

14. Procédé selon l'une quelconque des revendications 2 à 13, **caractérisé en ce que** ladite valeur seuil S1 est comprise entre 1 et 400 mgN/L.

15. Procédé selon l'une quelconque des revendications 1 à 14, **caractérisé en ce que** ladite valeur seuil prédéterminée S2 est comprise entre 0.01 µgN-HNO₂/L et 20 µgN-HNO₂/L.

16. Procédé selon l'une quelconque des revendications 2 à 15, **caractérisé en ce que** ladite valeur seuil S3 est comprise entre 0 et 120 mgN-NO₂/L.

## Patentansprüche

1. Verfahren zur Behandlung eines mit Stickstoff in Form von Ammonium beladenen Wassers in einem Sequencing-Batch-Reaktor (10) des Typs "Nitrat Shunt" und/oder "Nitritation-Deammonifikation", wobei das Verfahren mindestens umfasst:
- einen ersten Schritt (i) zur Versorgung des Sequencing-Batch-Reaktor (10) mit dem Wasser;
- einen Schritt (ii) zur belüfteten Nitritation;
- einen Schritt (iii) zur anoxischen Denitritation;
- einen Schritt (iv) zur Extraktion eines behandelten Wassers aus dem Reaktor;
**dadurch gekennzeichnet, dass** es ferner umfasst eine Online-Messung der Nitritkonzentration des in dem Reaktor vorhandenen Wassers, einen Schritt zum Messen des pH-Werts des in dem Reaktor enthaltenen Wassers, einen Schritt zur Berechnung der Konzentration an salpetriger Säure (HNO₂) des in dem Reaktor enthaltenen Wassers in Abhängigkeit von der Nitritkonzentration und dem pH-Wert, und einen Schritt zur Steuerung der Dauer des Schritts (ii) zur belüfteten Nitritation, der die folgenden Schritte umfasst:
- Vergleichen der Konzentration an salpetriger Säure mit einem vorbestimmten Schwellenwert S2,
- Unterbrechen des Schritts (ii) zur belüfteten Nitritation, sobald die Konzentration an salpetriger Säure den vorbestimmten Schwellenwert S2 übersteigt.

2. Verfahren nach Anspruch 1, **dadurch gekennzeichnet, dass** es eine Online-Messung der Ammoniumionenkonzentration des in dem Reaktor (10) vorhandenen Wasser und einen Schritt zur Steuerung des ersten Schritts (i) zur Versorgung des Reaktors (10) umfasst, wobei der Schritt zur Steuerung des ersten Schritts (i) zur Versorgung die folgenden Schritte umfasst:
- Berechnen der Summe der Nitritkonzentration und der Ammoniumkonzentration;
- Vergleichen der Summe mit einem vorbestimmten Schwellenwert S1;
- Vergleichen der Konzentration an salpetriger Säure mit dem vorbestimmten Schwellenwert S2;
- Prüfen des Wasserpegels in dem Reaktor;
- Unterbrechen des ersten Schritts (i) zur Versorgung, sobald die Summe größer ist als ein Schwellenwert S1 oder sobald die Konzentration an salpetriger Säure den Schwellenwert S2 übersteigt oder sobald der Höchststand des Reaktors erreicht ist.

3. Verfahren nach einem der Ansprüche 1 bis 2, **dadurch gekennzeichnet, dass** es einen Schritt zur Steuerung der Dauer des Schritts (iii) zur anoxischen Denitritation umfasst, wobei der Schritt zur Steuerung der Dauer des Schritts (iii) zur anoxischen Denitritation die folgenden Schritte umfasst:
- Vergleichen der Nitritkonzentration mit einem vorbestimmten Schwellenwert S3,
- Unterbrechen des Schritts (iii) zur anoxischen Denitritation, sobald die Nitritkonzentration kleiner ist als der vorbestimmte Schwellenwert S3.

4. Verfahren nach einem der Ansprüche 1 bis 3, **dadurch gekennzeichnet, dass** der Schritt (iii) zur anoxischen Denitritation einen Schritt zum Inkontaktbringen des Wassers mit heterotrophen Bakterien umfasst.

5. Verfahren nach einem der Ansprüche 1 bis 4 mit Ausnahme von Anspruch 2, **dadurch gekennzeichnet, dass** es eine Online-Messung der Ammoniumionenkonzentration des in dem Reaktor (10) vorhandenen Wasser und einen Schritt zur Steuerung des ersten Schritts (i) zur Versorgung des Reaktors (10) umfasst, wobei der Schritt zur Steuerung des ersten Schritts (i) zur Versorgung die folgenden Schritte umfasst:
- Vergleichen der Ammoniumionenkonzentration mit einem vorbestimmten Schwellenwert S4,
- Prüfen des Wasserpegels in dem Reaktor;
- Unterbrechen des ersten Schritts (i) zur Versorgung, sobald die Ammoniumionenkonzentration größer ist als der Schwellenwert S4 oder sobald der Höchststand des Reaktors erreicht ist.

6. Verfahren nach Anspruch 4 oder 5, **dadurch gekennzeichnet, dass** der Schritt (iii) zur anoxischen Denitritation einen Schritt zur Kohlenstoffinjektion in den Reaktor umfasst, und dadurch, dass das Verfahren einen Schritt zur Steuerung des Schritts zur Kohlenstoffinjektion umfasst, wobei der Schritt zur Steuerung des Schritts zur Kohlenstoffinjektion die folgenden Schritte umfasst:
- Vergleichen der Nitritkonzentration mit einem vorbestimmten Schwellenwert S5,
- Unterbrechen des Schritts zur Kohlenstoffinjektion, sobald die Nitritkonzentration kleiner ist als der Schwellenwert S5.

7. Verfahren nach Anspruch 5 oder 6, **dadurch gekennzeichnet, dass** der Schwellenwert S4 im Bereich zwischen 1 mgN-NH₄/L und 400 mgN-NH₄/L liegt.

8. Verfahren nach Anspruch 6 oder 7, **dadurch gekennzeichnet, dass** der Schwellenwert S5 im Bereich zwischen 0 mgN-NO₂/L und 120 mgN-NO₂/L liegt.

9. Verfahren nach einem der Ansprüche 1 bis 3, **dadurch gekennzeichnet, dass** der Schritt (iii) zur anoxischen Denitritation einen Schritt zum Inkontaktbringen des Wassers mit Anammox-Bakterien umfasst.

10. Verfahren nach Anspruch 9, **dadurch gekennzeichnet, dass** es eine Online-Messung der Ammoniumionenkonzentration des in dem Reaktor (10) vorhandenen Wassers umfasst, und dadurch, dass auf den Schritt (ii) zur belüfteten Nitritation ein zweiter Schritt zur belüftungsfreien Versorgung folgt, wobei das Verfahren einen Schritt zur Steuerung des zweiten Schritts zur belüftungsfreien Versorgung umfasst, der die folgenden Schritte umfasst:
- Berechnen des Verhältnisses von Ammoniumkonzentration zu Nitritkonzentration;
- Vergleichen des Verhältnisses mit einem Schwellenwert S6;
- Prüfen des Höchststands des Reaktors;
- Unterbrechen des zweiten Schritts zur Versorgung, sobald das Verhältnis größer ist als der Schwellenwert S6 oder sobald der Höchststand des Reaktors erreicht ist.

11. Verfahren nach Anspruch 9, **dadurch gekennzeichnet, dass** es eine Online-Messung der Ammoniumionenkonzentration des in dem Reaktor (10) vorhandenen Wassers umfasst, und dadurch, dass der Schritt zur Steuerung des Schritts (ii) zur belüfteten Nitritation ferner die folgenden Schritte umfasst:
- Berechnen des Verhältnisses von Ammoniumkonzentration zu Nitritkonzentration;
- Vergleichen des Verhältnisses mit einem Schwellenwert S6;
- Unterbrechen des Schritts (ii) zur belüfteten Nitritation, sobald die Konzentration an salpetriger Säure größer ist als der vorbestimmte Schwellenwert S2 oder sobald das Verhältnis kleiner ist als der Schwellenwert S6.

12. Verfahren nach Anspruch 10, **dadurch gekennzeichnet, dass** es mehrere Schritte zur Versorgung des Sequencing-Reaktors (10) umfasst, wobei der Schritt zur belüfteten Versorgung, an dessen Ende der Höchststand des Sequencing-Reaktors erreicht ist, einen letzten Schritt zur Versorgung bildet, wobei auf den letzten Schritt zur Versorgung ein letzter Schritt zur Steuerung der Belüftung folgt, wobei der letzte Schritt zur Steuerung der Belüftung die folgenden Schritte umfasst:
- Vergleichen der Konzentration an salpetriger Säure mit einem vorbestimmten Schwellenwert S2;
- Berechnen des Verhältnisses zwischen der Ammoniumionenkonzentration und der Nitritkonzentration;
- Vergleichen des Verhältnisses mit dem Schwellenwert S6;
- Unterbrechen der Belüftung, sobald das Verhältnis kleiner ist als der Schwellenwert S6 oder sobald die Konzentration an salpetriger Säure größer ist als der Schwellenwert S2.

13. Verfahren nach einem der Ansprüche 9 bis 12, **dadurch gekennzeichnet, dass** der Schwellenwert S6 im Bereich zwischen 0,6 und 1,2 liegt.

14. Verfahren nach einem der Ansprüche 2 bis 13, **dadurch gekennzeichnet, dass** der Schwellenwert S1 im Bereich zwischen 1 und 400 mgN/L liegt.

15. Verfahren nach einem der Ansprüche 1 bis 14, **dadurch gekennzeichnet, dass** der vorbestimmte Schwellenwert S2 im Bereich zwischen 0,01 µgN-HNO₂/L und 20 µgN-HNO₂/L liegt.

16. Verfahren nach einem der Ansprüche 2 bis 15, **dadurch gekennzeichnet, dass** der Schwellenwert S3 im Bereich zwischen 0 und 120 mgN-NO₂/L liegt.

## Claims

1. Method for treating water charged with nitrogen in ammonium form within a sequencing batch reactor(10) of "nitrate shunt" and/or "nitritation-deammonification" type, said method comprising at least:
- a first step (i) for feeding said sequencing batch reactor (10) with said water;
- an aerated nitritation step (ii);
- an anoxic denitritation step (iii);
- a step (iv) for extracting treated water from said reactor,
**characterized in that** it further comprises an in-line measurement of the concentration of nitrites in said water present in said reactor, a step for measuring the pH of said water contained in said reactor, a step for computing the concentration of nitrous acid (HNO₂) in said water contained in said reactor as a function of said concentration of nitrites and of said pH, and a step for monitoring the duration of said aerated step (ii) of nitritation comprising the following steps:
- comparing said concentration of nitrous acid with a predetermined threshold value S2;
- stopping said aerated nitritation step (ii) as soon as said nitrous acid concentration becomes higher than said predetermined threshold value S2.

2. Method according to claim 1, **characterized in that** it comprises an in-line measurement of the concentration of ammonium ions in said water present in said reactor (10) and a step for monitoring said first step (i) for feeding said reactor, said step for monitoring said first step (i) for feeding comprising the following steps:
- computing the sum of said concentration of nitrites and said concentration of ammonium;
- comparing said sum with a predetermined threshold value S1;
- comparing said concentration of nitrous acid with the predetermined threshold value S2;
- verifying the level of water in said reactor;
- stopping said first step (i) for feeding as soon as said sum is higher than a threshold value S1 or said concentration of nitrous acid becomes higher than said threshold value S2 or said high level of said reactor is reached.

3. Method according to any one of the claims 1 to 2, **characterized in that** it comprises a step for monitoring the duration of said anoxic denitritation step (iii), said step for monitoring the duration of said anoxic denitritation step (iii) comprising the following steps:
- comparing said concentration of nitrites with a predetermined threshold value S3;
- stopping said anoxic denitritation step (iii) as soon as said concentration of nitrites is lower than said predetermined threshold value S3.

4. Method according to any of the claims 1 to 3, **characterized in that** said anoxic denitritation step (iii) comprises a step for placing said water in contact with heterotrophic bacteria .

5. Method according to any of the claims 1 to 4 with the exception of claim 2, **characterized in that** it comprises an in-line measurement of the concentration of ammonium ions in said water present in said reactor (10) and a step for monitoring said first step (i) for feeding said reactor (10), said step for monitoring said first step (i) for feeding comprising the following steps:
- comparing said concentration of ammonium ions with a predetermined threshold value S4;
- verifying the level of water in said reactor;
- stopping said first feeding step (i) as soon as said concentration of ammonium ions is higher than said threshold value S4 or as soon as the high level of said reactor is reached.

6. Method according to claim 4 or 5, **characterized in that** said anoxic denitritation step (iii) comprises a step for injecting carbon into said reactor and **in that** said method comprises a step for monitoring said step for injecting carbon, said step for monitoring said step for injecting carbon comprising the following steps:
- comparing said concentration of nitrites with a predetermined threshold value S5;
- stopping said step for injecting carbon as soon as said nitrites concentration is lower than said threshold value S5.

7. Method according to claim 5 or 6, **characterized in that** said threshold value S4 ranges from 1mgN-NH₄/L to 400mgN-NH₄/L.

8. Method according to claims 6 or 7, **characterized in that** said threshold value S5 ranges from 0mgN-NO₂/L to 120mgN-NO₂/L.

9. Method according to any of the claims 1 to 3, **characterized in that** said anoxic denitritation step (iii) comprises a step for putting said water into contact with anammox bacteria.

10. Method according to claim 9, **characterized in that** it comprises in-line measurement of the concentration of ammonium ions in said water present in said reactor (10) and **in that** said aerated nitritation step (ii) is followed by a second step for feeding without aeration, said method comprising a step for monitoring said second step for feeding without aeration which comprises the following steps:
- computing the ratio of said ammonium concentration to said nitrites concentration;
- comparing said ratio with a threshold value S6;
- verifying the high level of water in said reactor;
- stopping said second step (i) for feeding as soon as said ratio is higher than said threshold value S6 or as soon as the high level of said reactor is reached.

11. Method according to claim 9, **characterized in that** it comprises an in-line measurement of the concentration of ammonium ions in said water present in said reactor (10), and **in that** said step for monitoring said aerated step (ii) of nitritation also comprises the following steps:
- computing the ratio of said ammonium concentration to said concentration of nitrites;
- comparing said ratio with a threshold value S6;
- stopping said aerated nitritation step (ii) as soon as said concentration of nitrous acid is higher than said predetermined threshold value S2 or said ratio is lower than said threshold value S6.

12. Method according to claim 10, **characterized in that** it comprises several steps for feeding said sequencing reactor (10), the step for aerated feeding at the end of which the high level of said sequencing reactor is reached constituting a final step for feeding, said final step for feeding being followed by a final step for monitoring the aeration, said final step for monitoring the aeration comprising the following steps:
- comparing said nitrous acid concentration with said predetermined threshold value S2;
- computing the ratio between said concentration of ammonium ions and said nitrites concentration;
- comparing said ratio with said threshold value S6;
- stopping said aeration as soon as said ratio is below said threshold value S6 or said nitrous acid concentration is higher than said threshold value S2.

13. Method according to any one of the claims 9 to 12, **characterized in that** said threshold value S6 ranges from 0.6 to 1.2.

14. Method according to any one of the claims 2 to 13, **characterized in that** said threshold value S1 ranges from 1 to 400 mgN/L.

15. Method according to any of the claims 1 to 14, **characterized in that** said predetermined threshold value S2 ranges from 0.01 µgN-HNO₂/L to 20 µgN-HNO₂/L.

16. Method according to any one of the claims 2 to 15, **characterized in that** said threshold value S3 ranges from 0 to 120mgN-NO₂/L.
